# EUROPEAN PATENT SPECIFICATION

(11) **EP 2 042 777 B1**
(45) Date of publication and mention of the grant of the patent: **26.10.2016**
(21) Application number: 08164775.2
(22) Date of filing: 22.09.2008
(51) Int. Cl.: F16H 61/32

(54) **Structure for disposing a shift actuator in a power unit for saddle-ride type vehicle**
Struktur zur Bereitstellung eines Schiebeschalters in einer Leistungseinheit für ein Motorrad
Structure pour la disposition d'un actionneur de commande de vitesse dans une unité d'alimentation pour véhicule à monture de selle

(30) Priority: 29.09.2007 JP 2007256956; 28.12.2007 JP 2007341202; 28.12.2007 JP 2007341201
(43) Date of publication of application: 01.04.2009
(73) Proprietor: Honda Motor Co., Ltd., Minato-ku Tokyo 107-8556 (JP)
(72) Inventor: Ogasawara, Atsushi, Wako-shi, Saitama 351-0193 (JP); Fujimoto, Yasushi, Wako-shi, Saitama 351-0193 (JP); Sato, Toshiyuki, Wako-shi, Saitama 351-0193 (JP); Maehara, Hayato, Wako-shi, Saitama 351-0193 (JP)
(74) Representative: Rupp, Christian

(56) References cited:
- EP-A- 0 243 004
- EP-A- 1 502 801
- EP-A- 1 767 831
- JP-A- 2001 280 489
- JP-A- 2006 017 221
- US-A- 3 894 442
- US-A1- 2007 144 285
- US-A1- 2008 099 306
- US-A1- 2008 127 766

## Description

### Technical Field

The present invention relates to a power unit for a saddle-ride type vehicle. In the power unit, a transmission mechanism, which is disposed in the course of power transmission used for transmitting the torque of a crankshaft to a drive wheel, is installed in the crank case which rotatably supports the crankshaft and forms a part of an engine main body. Moreover, a shift actuator to drive and control the gear-shifting action of the transmission mechanism is disposed in the engine main body. The engine further comprises a valve-operating device capable of changing operation modes of the engine valves. The present invention relates to an improved structure for disposing a shift actuator and a valve operation controller.

### Background of the invention

Patent Document 1 discloses a power unit to be mounted on a motorcycle. In the disclosed power unit, a shift actuator to drive and control the gear-shifting action of the transmission mechanism installed in a crankcase is disposed on the top surface of the crankcase.
[Patent Document 1] Japanese Unexamined Patent Application Publication No. Sho 63-125490

A structure, such as one disclosed by Patent Document 1, in which the shift actuator is disposed on the top surface of the crankcase, imposes various constraints that lowers the degree of freedom in the layout for the functional parts of the motorcycle disposed above the crankcase, such as an intake system, an storage box, the battery, and a riding seat.

Further, EP0243004 A1 discloses a structure according to the preamble of claim 1.

### Object and summary of the invention

The present invention is made in view of the above-described circumstances. Accordingly, an object of the present invention is to provide a structure for disposing a shift actuator in a power unit for a saddle-ride type vehicle so that a high degree of freedom in the layout is guaranteed for the functional parts disposed around the crankcase. At the same time, the provided structure reduces the amount of outward protrusion from the crankcase and to make the maintenance work easier.

The present invention seeks to address the above-described problems. The invention also aims at other objects and particularly the solution of other problems as will appear in the rest of the present description.

For the purpose of achieving above-mentioned objects, the invention is defined by a structure according to claim 1.

Accordingly, the degree of freedom in laying out the functional parts around the crankcase can be made higher. In addition, an easier access to the shift actuator from the outer side of the power unit can allow an easier maintenance work for the shift actuator. Moreover, the operational axis of the shift actuator is placed on the plane that is orthogonal to the axis of the transmission mechanism within the crankcase. Accordingly, though the shift actuator is attached to the side surface of the crankcase, the amount of outward protrusion of the shift actuator from the crankcase can be reduced to the minimum.

The invention further proposes a structure, wherein the shaft end of an output shaft is covered with a cover that is detachably attached to a side surface of the crankcase, the output shaft forming a part of the transmission mechanism such that the torque transmitted from the crankshaft to the transmission mechanism is outputted towards the drive wheel though the output shaft, and the shift actuator is attached to the side surface of the crankcase in a position located above the covers and located closer to the center than the outer ends of the a cover extending along the axial direction of the output shaft.

Accordingly, the shift actuator can be protected, by the covers, from the kicked-up stones and splashed-up muddy water that come from below. As a consequence, no special parts dedicated only to the protection of the shift actuator is necessary any longer, and this contributes to a reduction of the number of component parts as a whole. Besides, such arrangement makes it no longer necessary to provide a boss or the like used to attach a protection cover on a position around the shift actuator. This eliminates a possible constraint that would otherwise be imposed by the boss or the like on the layout of the other component parts, and increases the degree of freedom in laying out the other component parts.

In a preferred embodiment, the structure further comprises a generator cover attached to the side surface of the crankcase; a generator chamber formed by the generator cover; and a generator which is connected to the crankshaft and which is installed in the generator chamber, wherein the shift actuator is attached to the side surface of the crankcase so as to be placed in a position located at the rear of the generator cover and located closer to the center than the outer end of the generator cover extending along the axial direction of the crankshaft.

Therefore, the shift actuator can be disposed by making use of the space around the generator cover that sticks out from the side surface of the crankcase. This prevents the arrangement of the shift actuator from making the power unit larger in size along the axial direction of the crankshaft. In addition, the generator cover can be used to protect the shift actuator from the kicked-up stones and splashed-up muddy water that comes from the front-side of the vehicle. As a consequence, no special parts dedicated only to the protection of the shift actuator is necessary any longer, and this contributes to a reduction of the number of component parts as a whole. Moreover, such arrangement makes it no longer necessary to provide a boss or the like used to attach a protection cover at a position around the shift-driving electric motor. This eliminates a possible constraint that would otherwise be imposed by the boss or the like on the layout of the other component parts, and increases the degree of freedom in laying out the other component parts.

Furthermore, the shift actuator is attached to the side surface of the crankcase while preferably the operational axis of the shift actuator is directed obliquely in the up-and-down direction.

Hence, when the shift actuator is attached or detached, the work is not obstructed by the generator cover located in front of the shift actuator. This makes the maintenance work for the shift actuator easier.

According to the present invention, the engine comprises a valve-operating device provided additionally with valve operation mode change mechanisms capable of changing operation modes of engine valves, a clutch device for switching the making/breaking of power transmission between the crankshaft and the transmission mechanism, the clutch device disposed on a lateral side of the crankcase on the side of one end of the crankshaft, a valve operation controller for controlling the operations of the valve operation mode change mechanisms, and a speed change controller for controlling a gear change operation of the transmission mechanism, the valve operation controller and the speed change controller being attached to an engine body inclusive of the crankcase, characterized in that the valve operation controller and the speed change controller are attached to the engine body on the opposite side of the clutch device with respect to a vehicle body center line in a direction along the axis of the crankshaft.

Accordingly, the valve operation controller and the speed change controller are attached to the engine body on the opposite side of the clutch device, which is a heavyweight body, in a direction along the axis of the crankshaft. Therefore, it is possible to prevent the center of gravity of the power unit from being largely deviated to the side on which the clutch device is disposed. This ensures that the need to concentrately lay out vehicle body component parts on the opposite side of the clutch device for the purpose of obtaining good balance of the center gravity of the vehicle body as a whole can be eliminated, and the degree of freedom in laying out the vehicle body component parts can be enhanced.

The valve operation controller and the speed change controller are preferably attached to a side surface, along the vehicle body center line, of the engine body. Hence, the maintenance of the valve operation controller and the speed change controller is facilitated.

Moreover, a clutch cover defining between itself and the crankcase a clutch chamber for containing the clutch device is preferably connected to the crankshaft, and a clutch controller for controlling connection/disconnection operations of the clutch device is preferably attached to the clutch cover.

Hence, the clutch device and the clutch controller can be disposed close to each other and in a compact form, while preventing the center of gravity of the power unit from being deviated to the side on which the clutch device, the clutch cover and the clutch controller are disposed.

In addition, the generator driven by power transmitted from the crankshaft is preferably disposed on the opposite side of the clutch device in the axial direction of the crankshaft, and a power generation voltage control driver for controlling a power generation voltage of the generator is attached to the inside of the generator cover connected to the crankcase.

This has the advantage, in cooperation with the valve operation controller and the speed change controller, that the center of gravity of the power unit is prevented from being largely deviated to the side on which the clutch device is disposed.

Moreover, the transmission mechanism preferably includes first and second input shafts parallel to each other, and a single output shaft parallel to the input shafts, and the clutch device is configured to be of a twin-clutch type, including a first clutch interposed between the crankshaft and the first input shaft, and a second clutch interposed between the crankshaft and the second input shaft.

Therefore, though the weight of the clutch device is increased, the center of gravity of the power unit can be prevented from being largely deviated to the clutch device side, since the valve operation controller and the speed change controller are attached to the engine body on the opposite side of the clutch device in the direction along the axis of the crankshaft.

In a preferred embodiment, the transmission mechanism comprises a shift drum being turnably mounted by the crankcase, wherein the speed change controller is configured to drive said shift drum to turn so as to cause said transmission mechanism to perform a gear change operation, said speed change controller including a power transmission device configured to transmit a rotational power of the shift actuator to said shift drum, with said shift actuator and at least a part of said power transmission device being disposed on a lateral side of said crankcase on the side of one end in the axial direction of said shift drum, wherein said shift actuator and said shift drum are so disposed as to at least partly overlap with each other when viewed along the axial direction of said shift drum.

Hence, the shift actuator and at least a part of the shift drum overlap with each other when viewed along the axial direction of the shift drum. This makes it possible to reduce the area occupied by the shift drum and the shift actuator on a lateral side of the crankcase, and to further enhance the degree of freedom in laying out other component parts. In addition, by disposing the shift actuator and the shift drum close to each other, it is possible to reduce the size of the power transmission device and to contrive a reduction in weight.

The power transmission device preferably includes a speed reduction means for transmitting said rotational power of said shift actuator while reducing the output rotating speed of said shift actuator, and a motion conversion means connected in a conjunction manner to said speed reduction means so as to be rotated by the power transmitted from said speed reduction means and to convert the rotating motion into a turning motion of said shift drum, and said motion conversion means and said shift actuator disposed on a lateral side of said crankcase on the side of one end in the axial direction of said shift drum are so disposed as to at least partly overlap with each other when viewed along the axial direction of said shift drum.

Accordingly, the power transmission device includes the speed reduction means for transmitting the rotational power of the shift actuator, and the motion conversion means by which the rotating motion transmitted from the speed reduction means is converted into a turning motion of the shift drum, and the motion conversion means and the shift actuator disposed on a lateral side of the crankcase on the side of one end in the axial direction of the shift drum are so disposed as to at least partly overlap with each other when viewed along the axial direction of the shift drum. This makes it possible to reduce the area occupied by the shift actuator and the motion conversion means on a lateral side of the crankcase, and to enhance the degree of freedom in laying out other component parts.

In addition, the motion conversion means is preferably so disposed as to at least partly overlap with said shift drum (180) when viewed along the axial direction of said shift drum (180).

Therefore, by disposing the drive means and the motion conversion means close to each other on the shift drum side, it is possible to further reduce the area occupied by the shift actuator and the motion conversion means on a lateral side of the crankcase, and to enhance the degree of freedom in laying out other component parts. Besides, it is possible to reduce the sizes of the speed reduction means and the motion conversion means, and to contrive a reduction in weight.

Preferably, the rotational axes of said shift actuator, said speed reduction means and said motion conversion means are disposed in a plane orthogonal to the axis of said shift drum.

Therefore it is possible to suppress the protrusion of the drive means, the speed reduction means and the motion conversion means from a side surface of the crankcase. Especially, the protrusion amount of the shift actuator which protrudes most from the side surface of the crankcase can be suppressed, which contributes to a reduction in engine size.

Furthermore, said motion conversion means is disposed so that its rotational axis is parallel to the rotational axis of said shift actuator.

Therefore, the part of overlap of shift actuator and the motion conversion means as viewed in the axial direction of the shift drum can be set to be large, and the area occupied by the shift actuator and the motion conversion means on a lateral side of the crankcase can be further reduced.

Moreover, said motion conversion means is so disposed that at least a part thereof is included within a maximum width of said shift actuator in the axial direction of shift actuator when viewed along the axial direction of said shift drum.

Hence, the area occupied by the shift actuator and the motion conversion means on a lateral side of the crankcase can be further reduced.

In addition, said motion conversion means is a barrel cam which is provided in its outer periphery with a helical cam groove.

Hence, it is possible to simplify the configuration of the motion conversion means, and to further reduce the size of the motion conversion means.

It should be noted that a speed change mechanism 103 of the embodiment corresponds to the transmission mechanism of the present invention. A counter shaft 107 of the embodiment corresponds to the output shaft of the present invention. A first gear cover 116 and a second gear cover 117 of the embodiment correspond to the covers of the present invention. A shift-driving electric motor 181 of the embodiment corresponds to the shift actuator of the present invention. A rear wheel WR of the embodiment corresponds to the drive wheel of the present invention.

A mode of carrying out the present invention will be described below. The descriptions will be based on an embodiment of the present invention while the embodiment will be described with reference to accompanying drawings.

### Brief description of the drawings

Further features, advantages and objects of the present invention will become apparent for the skilled person when reading the following detailed description of embodiments of the present invention, when taken in conjunction with the figures of the enclosed drawings.
Fig. 1 is a left side view of a motorcycle.
FIG. 2 is a plan view of a body frame and an engine body, as viewed along arrows of line 2-2 of FIG. 1.
FIG. 3 is a left side view of a power unit.
FIG. 4 is a right side view of the power unit.
FIG. 5 is a sectional view taken along line 5-5 of FIG. 3.
FIG. 6 is a sectional view taken along line 6-6 of FIG. 5.
FIG. 7 is a sectional view taken along line 7-7 of FIG. 3.
FIG. 8 is a sectional view taken along line 8-8 of FIG. 7.
FIG. 9 is an enlarged sectional view of an essential part of FIG. 8.
FIG. 10 is a longitudinal sectional view of a gear speed change mechanism and a clutch device.
FIG. 11 is an enlarged view of an essential part of FIG. 10.
FIG. 12 is an enlarged sectional view taken along line 12-12 of FIG. 3.
FIG. 13 is an enlarged sectional view taken along line 13-13 of FIG. 12.
FIG. 14 is an enlarged view of an essential part of FIG. 3.
FIG. 15 is a block diagram showing the configuration of a hydraulic system.
Fig. 16 is an enlarged view of a principal portion of Fig. 4.

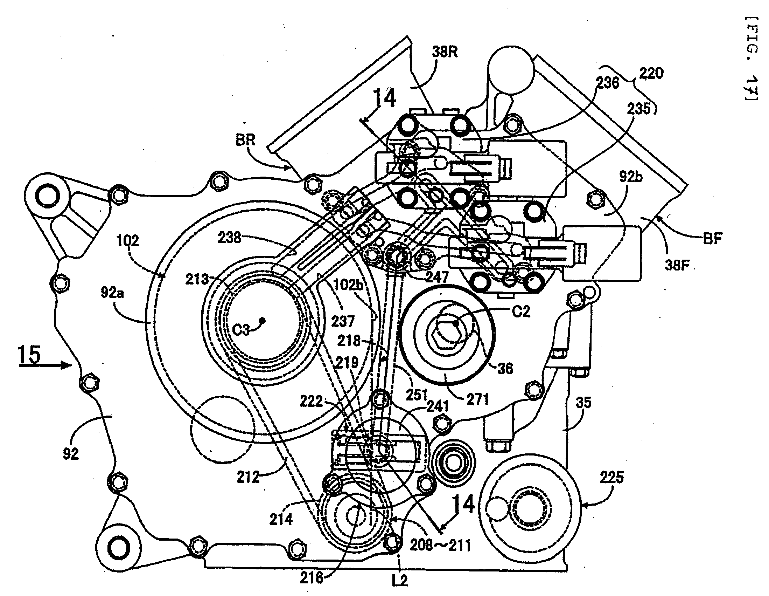

Fig. 17 is a sectional view taken along the line 14-14 of Fig. 16.
Fig. 18 is a view shown as indicated by the arrow 15 of Fig. 16.

### Detailed description of embodiments

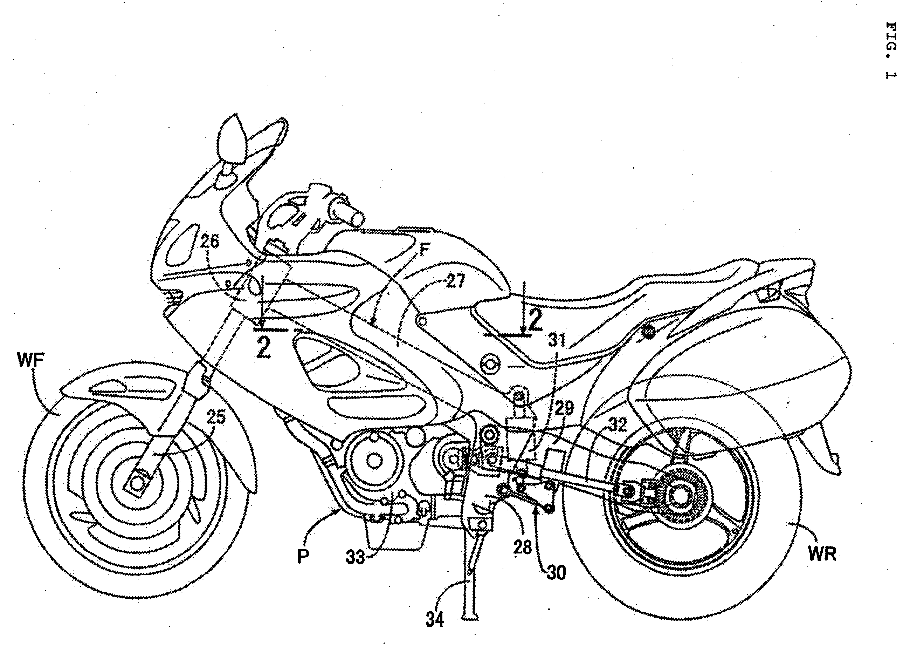

Referring to Fig. 1, a vehicle-body frame F of a saddle-ride type vehicle such as a motorcycle for example includes a head pipe 26, a right-and-left pair of main frames 27, a right and left pair of pivot plates 28. The head pipe 26 rotatably supports a steerable front fork 25. The front fork 25 pivotally supports a front wheel WF. The main frames 27 extend from the head pipe 26 downwards to the rear. The pivot plates 28, which extend downwards, are provided contiguously from the rear end of respective main frames 27. A swing arm 29, which is swingably supported at its front end by the pivot plates 28, pivotally supports a rear wheel WR at its rear portion. In addition, a linkage 30 is disposed between the lower portions of the pivot plates 28 and the front portion of the swing arm 29. Moreover, a cushion unit 31 is disposed between the upper portions of the pivot plates 28 and the linkage 30.

A power unit P, which is composed of an engine E and a transmission M, is suspended from the main frames 27 and the pivot plates 28. The torque outputted from the transmission M of the power unit P is transmitted to the rear wheel WR by means of a drive shaft 32, which extends in the front-rear direction.

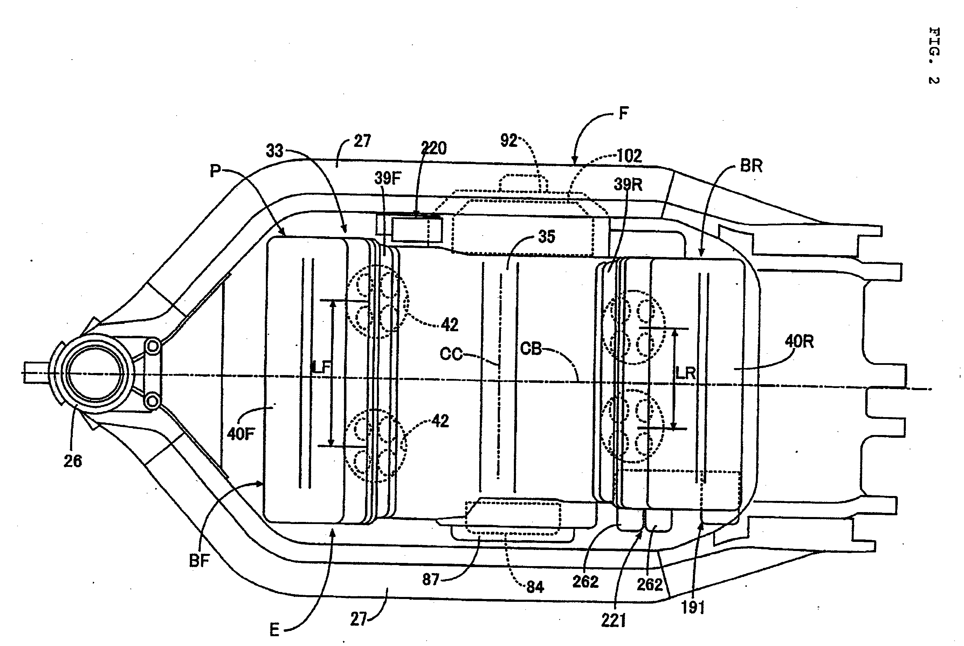

Referring to FIG. 2 also, the power unit P has, for example, a 4-cylinder V-type engine E, and an engine body 33 of the engine E is disposed inside both the main frames 27, 27 in plan view. Moreover, a side stand 34 is attached either to an engine main body 33 of the engine E or to the vehicle-body frame F. In this embodiment, as shown in figure 1, the side stand 34 is attached to the lower portion of the left-hand side pivot plate 28 of the vehicle-body frame F. Accordingly, when the motorcycle is parked with the side stand 34 being in the down position, the motorcycle leans leftwards.

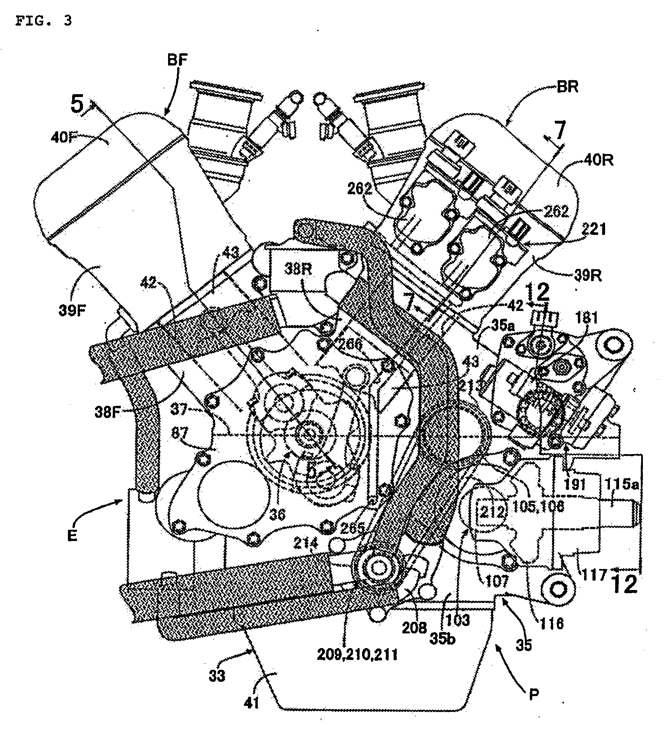

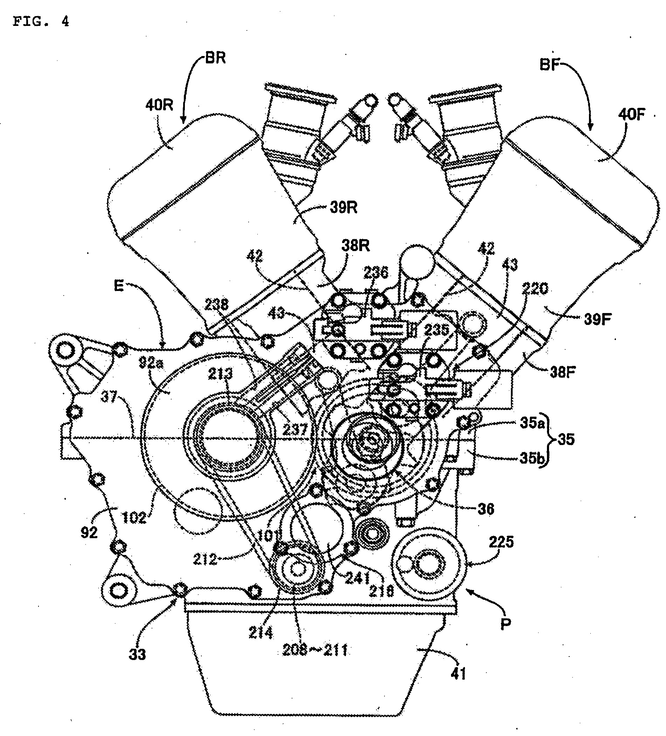

In FIGS. 3 and 4, the engine body 33 of the engine E is configured to be of a V-type water-cooled system which includes a front bank BF disposed on the front side in its state of being mounted on the motorcycle, and a rear bank BR disposed on the rear side relative to the front bank BF. A crankshaft 36 extending along the vehicle width direction of the motorcycle, namely, along the left-right direction is rotatably borne on a crankcase 35 shared by both the banks BF and BR.

The crankcase 35 has an upper case half 35a and a lower case half 35b coupled to each other. The front and rear banks BF and BR are formed integrally with the upper case half 35a so that they are V-shaped in overall shape, and the axis of the crankshaft 36 is disposed on the connecting surface 37 between the upper case half 35a and the lower case half 35b.

The front bank BF is composed of a front cylinder block 38F integrally connected to the upper case half 35a of the crankcase 35, a front cylinder head 3 9F connected to the front cylinder block 38F, and a front head cover 40F connected to the front cylinder head 39F. The rear bank BR is composed of a rear cylinder block 38R integrally connected to the upper case half 35a of the crankcase 35, a rear cylinder head 39R connected to the rear cylinder block 38R, and a rear head cover 40R connected to the rear cylinder block 39R. An oil pan 41 is connected to a lower part of the crankcase 35.

The front cylinder block 38F is provided therein with two cylinder bores 42 arrayed in the axial direction of the crankshaft 36. The front cylinder block 38F is connected to the crankcase 35 in such a manner that the axes of the cylinder bores 42 are inclined forwardly upwards in the condition where the engine body 33 is suspended from the body frame F. Similarly, the rear cylinder block 38R is provided therein with two cylinder bores 42 arrayed in the axial direction of the crankshaft 36. The rear cylinder block 38R is connected to the crankcase 35 in such a manner that the axes of the cylinder bores 42 are inclined rearwardly upwards in the condition where the engine body 33 is suspended from the body frame F. Besides, pistons 43 slidably fitted respectively in both the cylinder bores 42 in the front bank BF and pistons 43 slidably fitted respectively in both the cylinder bores 42 in the rear bank BR are connected, in common, to the crankshaft 36.

As shown in FIG. 2, the interval LF between both the cylinder bores 42 in the front bank BF is set to be greater than the interval LR between both the cylinder bores 42 in the rear bank BR. The width of the rear bank BR in the axial direction of the crankshaft 36 is set to be smaller than that of the front bank BF so that the rear bank BR is hidden behind the front bank BF in front view.

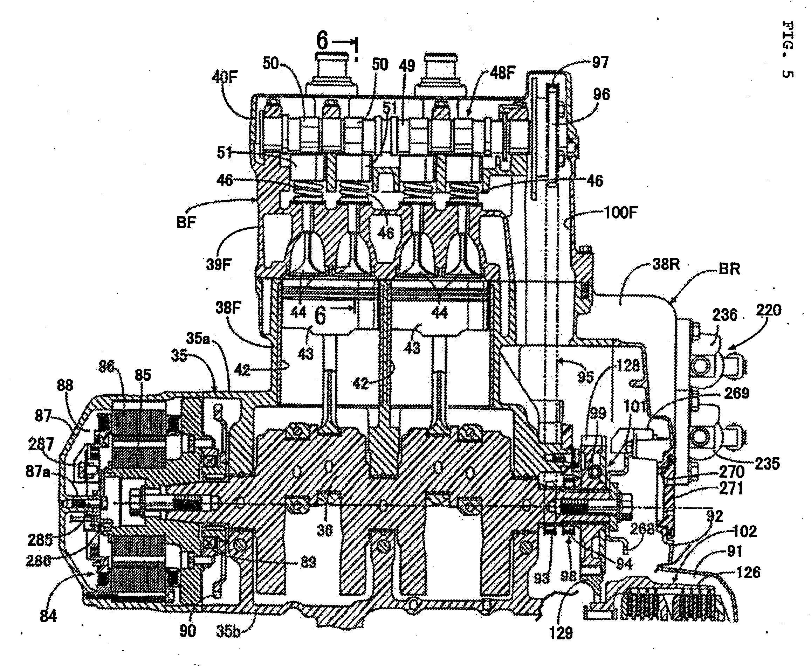

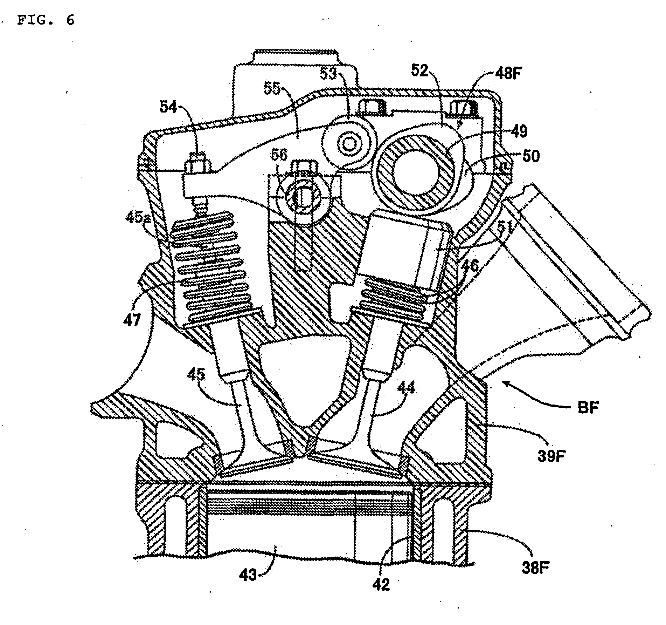

In FIGS. 5 and 6, in the front cylinder head 39F, a pair each of intake valves 44 on the basis of each of the cylinder bores 42 are openably and closably disposed in the state of being urged in valve-closing directions by valve springs 46, and a pair each of exhaust valves 45 on the basis of each cylinder bore are openably and closably disposed in the state of being urged in valve-closing directions by valve springs 47. The intake valves 44 and the exhaust valves 45 are driven to open and close by a front bank side valve-operating device 48F.

The front bank side valve-operating device 48F includes: a camshaft 49 which is rotatably borne on the front cylinder head 39F while having its axis parallel to the crankshaft 36 and which is disposed on the upper side of the intake valves 44; intake-side valve lifters 51 which are interposed between a plurality of (in this embodiment, four) intake-side cams 50 provided on the camshaft 49 and the intake valves 44 and which are slidably fitted in the front cylinder head 39F; and rocker arms 55 which are provided at their one-side ends with rollers 53 in rolling contact with a plurality of (in this embodiment, four) exhaust-side cams 52 provided on the camshaft 49 and of which other-side ends are screw engaged with tappet screws 54 making contact with the upper ends of stems 45a of the exhaust valves 45 so that the advanced/retracted positions of the tappet screws 54 can be controlled. The rocker arms 55 are swingably borne on a rocker shaft 56 which is fixed to the front cylinder head 39F while having its axis parallel to the camshaft 49.

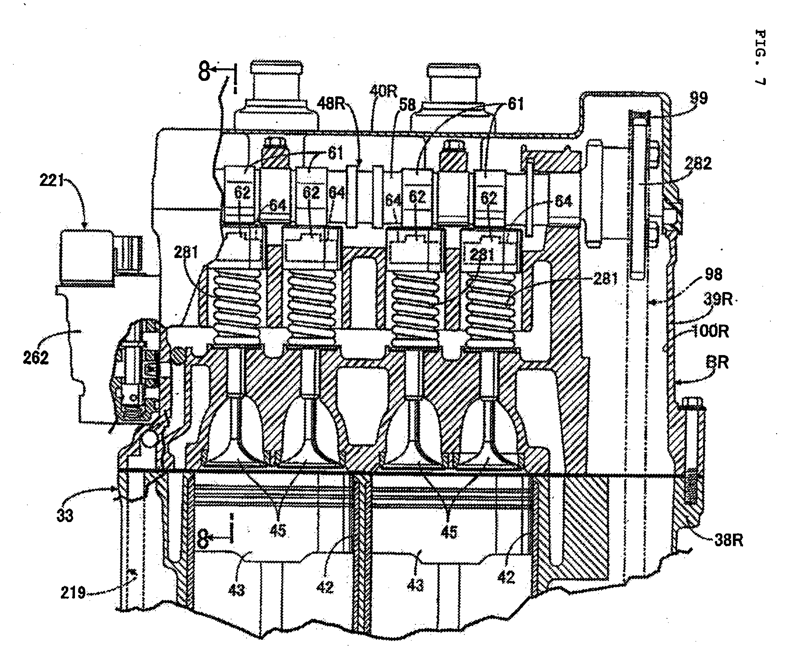

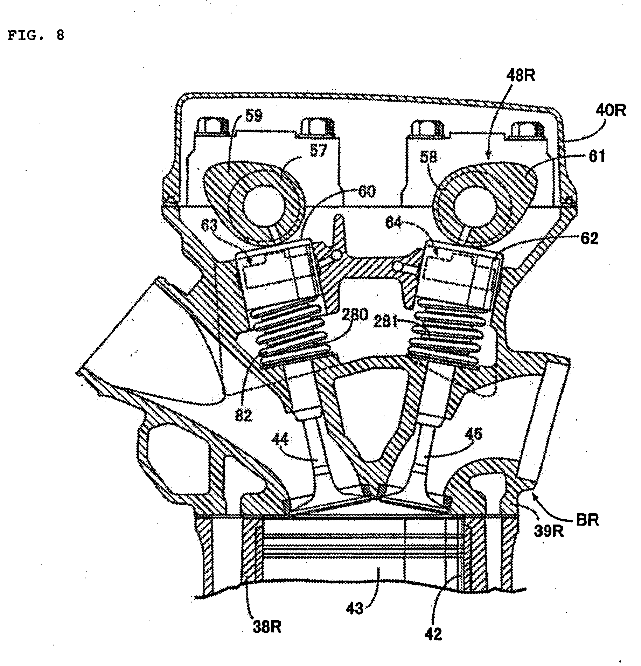

In FIGS. 7 and 8, in the rear cylinder head 39R, a pair each of intake valves 44 and a pair each of exhaust valves 45 on the basis of each of the cylinder bores 42 are openably and closably disposed in the state of being urged in valve-closing directions by valve springs 280, 281. The intake valves 44 and the exhaust valves 45 are driven to open and close by a rear bank side valve-operating devices 48R.

The rear bank side valve-operating device 48R includes: an intake-side camshaft 57 which is rotatably borne on the rear cylinder head 39R while having its axis parallel to the crankshaft 36 and which is disposed on the upper side of the intake valves 44 ; an exhaust-side camshaft 58 which is rotatably borne on the rear cylinder head 39R while having its axis parallel to the crankshaft 36 and which is disposed on the upper side of the exhaust valves 45; intake-side valve lifters 60 which are interposed between a plurality of (in this embodiment, four) intake-side cams 59 provided on the intake-side camshaft 57 and the intake valves 44 and which are slidably fitted in the rear cylinder head 39R; and exhaust-side valve lifters 62 which are interposed between a plurality of (in this embodiment, four) exhaust-side cams 61 provided on the exhaust-side camshaft 58 and the exhaust valves 45 and which are slidably fitted in the rear cylinder head 39R.

Moreover, in the rear bank side valve-operating device 48R, an intake-side valve operation mode changing mechanism 63 by which the operation mode of the intake valves 44 in the rear bank BR can be switched between an opening/closing operation condition and a valve closed rest condition, and an exhaust-side valve operation mode changing mechanism 64 by which the operation mode of the exhaust valves 45 can be switched between an opening/closing operation condition and a valve closed rest condition, are additionally provided.

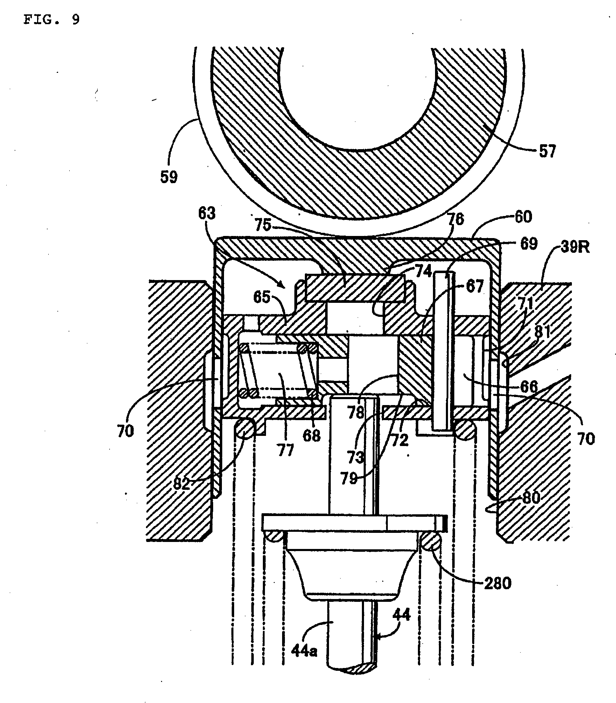

In FIG. 9, the intake-side valve operation changing mechanism 63 includes: a pin holder 65 which is provided in relation to the intake-side valve lifters 60 and which is slidably fitted in the intake-side valve lifter 60; a slide pin 67 slidably fitted in the pin holder 65 so as to define an oil pressure chamber 66 between itself and the inside surface of the intake-side valve lifter 60; a return spring 68 provided between the slide pin 67 and the pin holder 65 so as to produce a spring force for urging the slide pin 67 in the direction of reducing the volume of the oil pressure chamber 66; and a stopper pin 69 provided between the pin holder 65 and the slide pin 67 so as to inhibit the rotation about the axis of the slide pin 67.

The pin holder 65 is provided with an annular groove 71 in the outer periphery thereof. In addition, the pin holder 65 is provided with a bottomed slide hole 72 which has an axis orthogonal to the axis of the intake-side valve lifter 60, is opened at its one end into the annular groove 71, and is closed at its other end. Besides, the pin holder 65 is provided with an insertion hole 73 through which to insert a tip part of a stem 44a of the intake valve 44 urged in the valve-closing direction by the valve spring 280, and with an extension hole 74 which is so formed that the slide hole 72 is located between the extension hole 74 and the insertion hole 73. The insertion hole 73 and the extension hole 74 are coaxially provided so that a tip part of the stem 44a of the intake valve 44 can be contained therein.

A disk-like shim 75 for closing an end part of the extension hole 74 on the side of a closed end of the intake-side valve lifter 60 is fitted into the pin holder 65, and a projected part 76 making contact with the shim 75 is integrally formed at a central part of the inside surface of the closed end of the intake-side valve lifter 60.

The slide pin 67 is slidably fitted in the slide hole 72 in the pin holder 65. The oil pressure chamber 66 communicating with the annular groove 71 is formed between one end of the slide pin 67 and the inside surface of the intake-side valve lifter 60, and the return spring 68 is contained in a spring chamber 77 formed between the other end of the slide pin 67 and the closed end of the slide hole 72.

In an intermediate part in the axial direction of the slide pin 67, a containing hole 78 capable of coaxially communicating with the insertion hole 73 and the extension hole 74 is provided so that a tip part of the stem 44a is contained therein. An end part, on the side of the insertion hole 73, of the containing hole 78 is opened to a flat contact surface 79 formed at an outside surface of a lower part of the slide pin 67 so as to be face the insertion hole 73. The contact surface 79 is formed to be comparatively long along the axial direction of the slide pin 67, and the containing hole 78 is opened into a part, on the side of the oil pressure chamber 66, of the contact surface 79.

The slide pin 67 as above is slid in the axial direction in such a manner that an oil pressure force exerted on one end side of the slide pin 67 by the oil pressure in the oil pressure chamber 66 and a spring force exerted on the other end side of the slide pin 67 by the return spring 68 balance each other. At a non-operation time when the oil pressure in the oil pressure chamber 66 is low, the slide pin 67 is moved toward the right side in FIG. 9 so that the containing hole 78 is deviated from the axis of the insertion hole 73 and the extension hole 74, and the tip of the stem 44a is brought into contact with the contact surface 79. In an operating condition where the oil pressure in the oil pressure chamber 66 is high, the slide pin 67 is moved toward the left side in FIG. 9 so that the tip part of the stem 44a being inserted through the insertion hole 73 is contained into the containing hole 78 and the extension hole 74.

When the slide pin 67 is moved to such a position that the containing hole 78 coaxially communicates with the insertion hole 73 and the extension hole 74, the intake-side valve lifter 60 is slid by a pressing force exerted from the intake-side cam 59, and, attendant on this, the pin holder 65 and the slide pin 67 are also moved to the side of the intake valve 44 together with the intake-side valve lifter 60. However, this results in that only the tip part of the stem 44a is contained into the containing hole 78 and the extension hole 74, and no pressing force in the valve-opening direction is exerted on the intake valve 44 from the intake-side valve lifter 60 and the pin holder 65, so that the intake valve 44 remains at rest. When the slide pin 67 is moved to such a position that the tip part of the stem 44a is put into contact with its contact surface 79, the intake-side valve lifter 60 is slid by a pressing force exerted from the intake-side valve-operating cam 59, the pin holder 65 and the slide pin 67 are moved toward the side of the intake valve 44 accordingly, and, attendant on this, a pressing force in the valve-opening direction is exerted on the intake valve 44, so that the intake valve 44 is operated to open and close according to the rotation of the intake-side cam 59.

The rear cylinder head 39R is provided with support holes 80 in which the intake-side valve lifters 60 are to be fitted so that the intake-side valve lifters 60 are slidably borne. The support holes 80 are provided in their inside surfaces with annular recesses 81 in such a manner as to surround the intake-side valve lifters 60. The intake-side valve lifters 60 are each provided with a plurality of communication holes 70 through which the annular recesses 81 are permitted to communicate with the annular grooves 71, irrespectively of the sliding of the intake-side valve lifters 60 in the support holes 80. In addition, springs 82 for urging the intake-side valve lifters 60 in the direction for making contact with the intake-side cams 59 are provided between the intake-side valve lifters 60 and the rear cylinder head 39R.

The exhaust-side valve operation mode changing mechanism 64 is provided in relation to the exhaust-side valve lifters 62 while being configured in the same manner as the intake-side valve operation mode changing mechanism 63, and it can be switched between a condition where the exhaust valve 45 is closed to a rest state when a high oil pressure is exerted and a condition where the exhaust valve 45 is put into an opening/closing operation when the oil pressure exerted thereon is lowered.

In other words, the rear bank side valve-operating device 48R can switch between a condition where the intake valves 44 and the exhaust valves 45 of the two cylinders in the rear bank BR are put into opening/closing operations and a condition where the intake valves 44 and the exhaust valves 45 are closed to a rest state so as to obtain a cylinder rest state, by operation control of the intake-side valve operation mode changing mechanisms 63 and the exhaust-side valve operation mode changing mechanisms 64.

Again in FIG. 5, a generator 84 is connected to a left end part of the crankshaft 36 in the condition where the engine body 33 is mounted on the body frame F. The generator 84 is composed of an inner rotor 85 fixed to the crankshaft 36 and an outer stator 86 surrounding the inner rotor 85, and is contained in a generator containing chamber 88 defined by the crankcase 35 and a generator cover 87 connected to a left side surface of the crankcase 35. The stator 86 is fixed to the generator cover 87.

A support projected part 87a is projectedly provided at an inside surface of a central part of the generator cover 87. A bus ring 286 is firmly attached to the support projected part 87a through a screw member 285, and the outer stator 86 is provided in connection to the bus ring 285. A power generation voltage control driver 287 for controlling the power generation voltage of the generator 84 is attached to the bus ring 285. Thus, the power generation voltage control driver 287 is attached to the generator cover 87 through the bus ring 285.

Moreover, a gear 90 is connected to the rotor 86 through a one-way clutch 89 capable of power transmission to the side of the rotor 86, and power from a starting motor (not shown) is transmitted to the gear 90.

On the other hand, to the right side surface of the crankcase 35 in the condition where the engine body 33 is mounted on the body frame F, a clutch cover 92 defining a clutch chamber 91 between itself and the crankcase 35 is connected. In the clutch chamber 91, drive sprockets 93 and 94 are fixed to the crankshaft 36. The drive sprocket 93 on one side constitutes a part of a front bank side timing power transmission mechanism 95 by which the rotational power of the crankshaft 36 is transmitted, at a reduction ratio of 1/2, to the camshaft 49 in the front bank side valve-operating device 48F. The front bank side timing power transmission mechanism 95 has a configuration in which an endless cam chain 97 is wrapped around the drive sprocket 93 and a driven sprocket 96 provided at one end part (a right end part in the condition where the power unit P is mounted on the body frame F) of the camshaft 49.

The drive sprocket 94 on the other side constitutes a part of a rear bank side timing power transmission mechanism 98 by which the rotational power of the crankshaft 36 is transmitted, at a reduction ratio of 1/2, to the intake-side and exhaust-side camshafts 57 and 58 in the rear bank side valve-operating device 48R. The rear bank side timing power transmission mechanism 98 has a configuration in which an endless cam chain 99 is wrapped around the drive sprocket 94 and driven sprockets 282 (see FIG. 7) provided respectively at one-side end parts (right end parts in the condition where the power unit P is mounted on the body frame F) of the intake-side and exhaust-side camshafts 57 and 58.

The front cylinder block 38F and the font cylinder head 39F are provided with a cam chain chamber 100F in which the cam chain 97 runs, while the rear cylinder block 38R and the rear cylinder head 39R are provided with a cam chain chamber 100R in which the cam chain 99 runs.

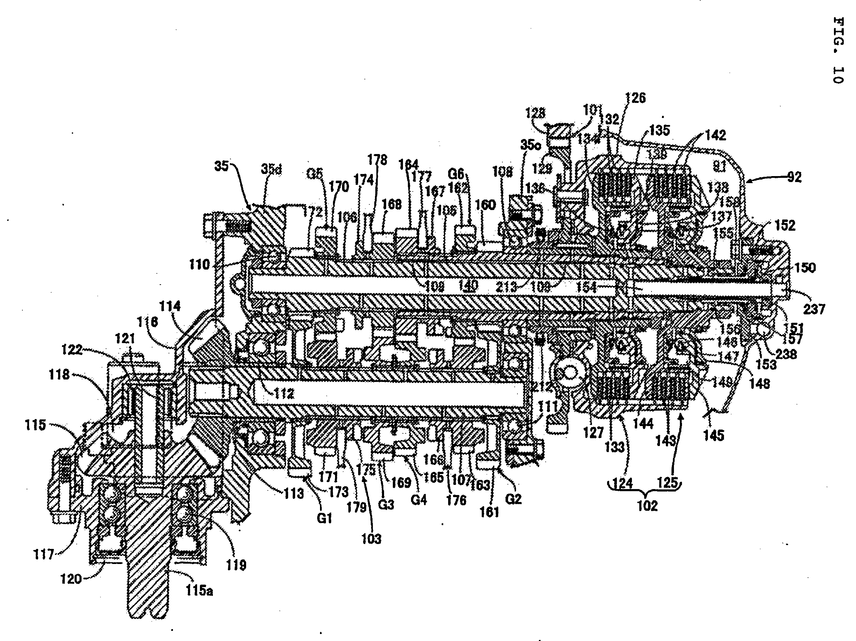

Referring to FIG. 10 also, the power transmission path between the crankshaft 36 and the rear wheel WR includes primary reduction gears 101, a clutch device 102, a gear speed change mechanism 103 and the drive shaft 32 (see FIG. 1) in this order from the side of the crankshaft 36. The primary reduction gears 101 and the clutch device 102 are contained in the clutch chamber 91, whereas the gear speed change mechanism 103 is contained in the crankcase 35.

The gear speed change mechanism 103 has a plurality of gear trains for a plurality of shift positions (gear speeds), for example, 1st to 6th speed gear trains G1, G2, G3, G4, G5, and G6 which can be selectively established. The 2nd, 4th and 6th speed gear trains G2, G4 and G6 are provided between a first main shaft 105 and a counter shaft 107, while the 1st, 3rd and 5th speed gear trains G1, G3 and G5 are provided between a second main shaft 106 coaxially and relatively rotatably penetrating the first main shaft 105 and the counter shaft 107.

The crankcase 35 includes a pair of side walls 35c and 35d which are opposed to each other, with a spacing therebetween in the axial direction of the crankshaft 36. An intermediate part of the first main shaft 105 formed in a hollow cylindrical shape having an axis parallel to the crankshaft 36 rotatably penetrates the side wall 35c, and a ball bearing 108 is interposed between the side wall 35c and the first main shaft 105. In addition, the second main shaft 106 having an axis parallel to the crankshaft'36 rotatably penetrates the first main shaft 105 in such a manner that relative positions of the first main shaft 105 and the second main shaft 106 in the axial direction are fixed. A plurality of needle bearings 109 are interposed between the first main shaft 105 and the second main shaft 106. Besides, the other end part of the second main shaft 106 is rotatably borne on the side wall 35d of the crankcase 35 through a ball bearing 110.

One end part of the counter shaft 107 having an axis parallel to the crankshaft 36 is rotatably borne on the side wall 35c through a ball bearing 111. The other end part of the counter shaft 107 rotatably penetrates the side wall 35d, with a ball bearing 112 and an annular seal member 113 being interposed between the other end part and the side wall 35d. A drive bevel gear 114 is fixed to a projected end part, projected from the side wall 35d, of the counter shaft 107. A driven bevel gear 115 having an axis of rotation extending in the front-rear direction of the motorcycle is meshed with the drive bevel gear 114.

Meanwhile, the drive bevel gear 114 and the driven bevel gear 115 are meshed with each other in a gear chamber 118 which is defined by a first gear cover 116 detachably connected to the side wall 35d of the crankcase 35 while covering a part of the side wall 35d, a second gear cover 117 which is detachably connected to the first gear cover 116, and the side wall 35d. A shaft part 115a coaxially possessed by the driven bevel gear 115 rotatably penetrates the second gear cover 117. A ball bearing 119 and an annular seal member 120 located on the outer side of the ball bearing 119 are interposed between the shaft part 115a and the second gear cover 117. One end part of a support shaft 121 is fitted to the driven bevel gear 115, and the other end part of the support shaft 121 is rotatably borne on the first gear cover 116 through a roller bearing 122. The shaft 115a is connected to the drive shaft 32.

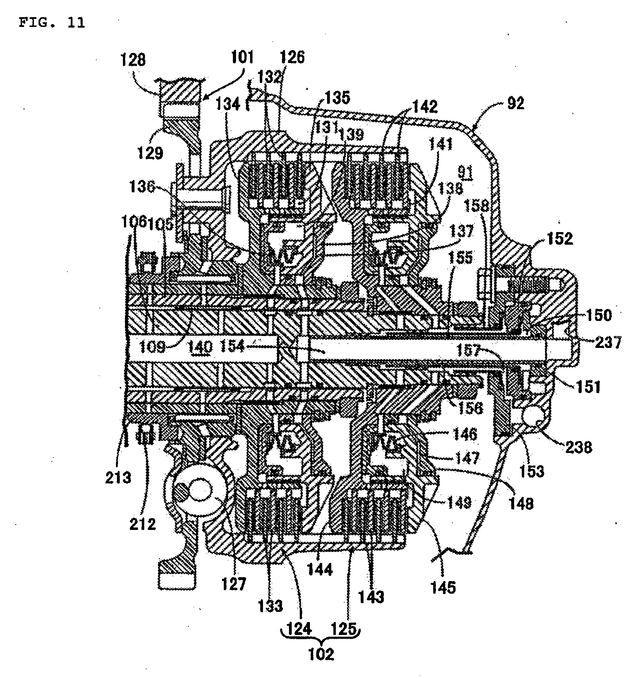

Referring to FIG. 11 also, the clutch device 102 is configured to be of a twin type, having first and second clutches 124 and 125 which are provided between the gear speed change mechanism 103 and the crankshaft 36. The clutch device 102 is contained in the clutch chamber 91 while being disposed on a lateral side of the crankcase 35 on one end side opposite to the side of the generator 84 of the crankshaft 36, specifically, on the right side of the crankcase 35 in the condition where the engine body 33 is mounted on the body frame F.

The first clutch 124 is provided between the crankshaft 36 and one end part of the first main shaft 105, while the second clutch 125 is provided between the crankshaft 36 and one end part of the second main shaft 106. The power from the crankshaft 36 is inputted to a clutch outer 126 provided in common for the first and second clutches 124, 125 through the primary reduction gears 101 and a damper spring 127.

The primary reduction gears 101 include a drive gear 128 provided on the crankshaft 36 on the outer side relative to the drive sprocket 94, and a driven gear 129 relatively rotatably borne on the main shaft 105 and meshed with the drive gear 128. The driven gear 129 is connected to the clutch outer 126 through the damper spring 127.

As shown in FIG. 5, a pulser 268 is attached to a shaft end of the crankshaft 36 on the outer side relative to the primary reduction gears 101, and a rotating speed detector 269 for detecting the rotating speed of the crankshaft 36 by detecting the pulser 268 is attached to the inside surface of the clutch cover 92. In addition, the clutch cover 92 is provided with an inspection hole 270 for inspection of the pulser 268. The inspection hole 270 is provided in the clutch cover 92 with an offset from the axis of the crankshaft 36 so as to be minimized in diameter, and the inspection hole 270 is closed with a detachable lid member 271.

The first clutch 124 includes: the clutch outer 126; a first clutch inner 131 coaxially surrounded by the clutch inner 126 and relatively non-rotatably connected to the first main shaft 105; a plurality of first friction disks 132 relatively non-rotatably engaged with the clutch outer 126; a plurality of second friction disks 133 relatively non-rotatably engaged with the first clutch inner 131 and disposed alternately with the first friction disks 132; a first pressure receiving plate 134 provided at the first clutch inner 131 oppositely to the first and second friction disks 132, 133 disposed in the manner of overlapping with each other; a first piston 135 clamping the first and second friction disks 132, 133 between itself and the first pressure receiving plate 134; and a first spring 136 for urging the first piston 135.

An end wall member 138 defining a first oil pressure chamber 137 (on which a back surface of the first piston 135 fronts) between itself and the first piston 135 is disposed in the state of being fixed to the first clutch inner 131. According to an increase in the oil pressure inside the first oil pressure chamber 137, the first piston 135 operates to clamp the first and second friction disks 132, 133 between itself and the first pressure receiving plate 134, whereby the first clutch 124 is put into a connected state in which the power transmitted from the crankshaft 36 to the clutch outer 126 is transmitted to the first main shaft 105. In addition, a canceller chamber 139 on which a front surface of the first piston 135 fronts is formed between the first clutch inner 131 and the first piston 135, and the first spring 136 is contained in the canceller chamber 139 so as to produce a spring force toward the side for reducing the volume of the first oil pressure chamber 137.

Moreover, the canceller chamber 139 communicates with a first oil passage 140 coaxially provided in the second main shaft 106 for the purpose of supplying an oil to lubricated parts of the gear speed change mechanism 103 and into the area between the first and second main shafts 105 and 106. Therefore, even when a centrifugal force attendant on the rotation is exerted on the oil in the first oil pressure chamber 137 in a reduced-pressure condition so as to produce a force for pressing the first piston 135, a centrifugal force is similarly exerted also on the oil in the canceller chamber 139, so that the first piston 135 is prevented from being non-desiredly moved to the side of clamping the first and second friction disks 132, 133 between itself and the first pressure receiving plate 134.

The second clutch 125 is disposed in array with the first clutch 124 in the axial direction of the second main shaft 106 in such a manner that the first clutch 124 is interposed between the second clutch 125 and the primary reduction gears 101. The second clutch 125 includes: the clutch outer 126; a second clutch inner 141 coaxially surrounded by the clutch outer 126 and relatively non-rotatably connected to the second main shaft 106; a plurality of third friction disks 142 relatively non-rotatably engaged with the clutch outer 126; a plurality of fourth friction disks 143 relatively non-rotatably engaged with the second clutch inner 141 and disposed alternately with the third friction disks 142; a second pressure receiving plate 144 provided at the second clutch inner 141 oppositely to the third and fourth friction disks 142, 143 mutually overlapping with each other; a second piston 145 for clamping the third and fourth friction disks 142, 143 between itself and the second pressure receiving plate 144 ; and a second spring 146 for urging the second piston 145.

An end wall member 148 defining a second oil pressure chamber 147 (on which a back surface of the second piston 145 fronts) between itself and the second piston 145 is disposed in the state of being fixed to the second clutch inner 141. According to an increase in the oil pressure in the second oil pressure chamber 147, the second piston 145 operates to clamp the third and fourth friction disks 142, 143 between itself and the second pressure receiving plate 144, whereby the second clutch 125 is put into a connected state in which the power transmitted from the crankshaft 36 to the clutch outer 126 is transmitted to the second main shaft 106. In addition, a canceller chamber 149 on which a front surface of the second piston 145 fronts is formed between the second clutch inner 141 and the second piston 145, and the second spring 146 is contained in the canceller chamber 149 so as to produce a spring force toward the side of reducing the volume of the second oil pressure chamber 147.

Moreover, the canceller chamber 149 communicates with a second oil passage 150 which will be described later. Therefore, even when a centrifugal force attendant on the rotation is exerted on the oil in the second oil pressure chamber 147 in a reduced-pressure condition so as to produce a force for pressing the second piston 145, a centrifugal force is similarly exerted also on the oil in the canceller chamber 149, so that the second piston 145 is prevented from being undesiredly moved toward the side of clamping the third and fourth friction disks 142, and 143 between itself and the second pressure receiving plate 144.

First, second and third partition members 151, 152, 153 are attached to the inner surface side of the clutch cover 92 covering the first and second clutches 124, 125 from the right side as viewed toward the front side with respect to the running direction of the motorcycle. A first tubular member 155 for forming a first oil passage 154 communicating with the first oil pressure chamber 137 of the first clutch 124 is provided between the second main shaft 106 and the first partition member 151. A second tubular member 156 coaxially surrounding the first tubular member 155 so as to define an annular second oil passage 150, which communicates with the canceller chamber 149 of the second clutch 125, between itself and the first tubular member 155 is provided between the second main shaft 106 and the second partition member 152. A third tubular member 158 coaxially surrounding the second tubular member 156 so as to define an annular second oil passage 157, which communicates with the second oil pressure chamber 147, between itself and the second tubular member 156 is provided between the second main shaft 106 and the third partition member 153.

Again in FIG. 10, the 4th speed gear train G4, the 6th speed gear train G6 and the 2nd speed gear train G2 arrayed in this order from the opposite side of the clutch device 102 are provided between the first main shaft 105 and the counter shaft 107 in the gear speed change mechanism 103. The 2nd speed gear train G2 is composed of a 2nd speed drive gear 160 provided integrally with the first main shaft 105, and a 2nd speed driven gear 161 relatively rotatably borne on the counter shaft 107 and meshed with the 2nd speed drive gear 160. The 6th speed gear train G6 is composed of a 6th speed drive gear 162 relatively rotatably borne on the first main shaft 105, and a 6th speed driven shaft 163 being relatively non-rotatably borne on the counter shaft 105 so as to be axially movable and being meshed with the 6th speed drive gear 162. The 4th speed gear train G4 is composed of a 4th speed drive gear 164 relatively non-rotatably borne on the first main shaft 105 so as to be axially movable, and a 4th speed driven gear 165 relatively rotatably borne on the counter shaft 107 and meshed with the 4th speed drive gear 164.

A first shifter 166 capable of switching between a state of being engaged with the 2nd speed driven gear 161, a state of being engaged with the 4th speed driven gear, and a state of being engaged with neither the 2nd driven gear 161 nor the 4th speed driven gear 165, is relatively non-rotatably and axially movably borne on the counter shaft 107 between the 2nd speed driven gear 161 and the 4th speed driven gear 165. The first shifter 166 is integrally provided with the 6th speed driven gear 163. In addition, the 4th speed drive gear 164 is provided as one body with a second shifter 167, which is relatively non-rotatably and axially movably borne on the first main shaft 105. The second shifter 167 can be switchedly engaged with and disengaged from the 6th speed drive gear 162.

When the first shifter 166 is engaged with the 2nd speed driven gear 161 in the condition where the second shifter 167 is not engaged with the 6th speed drive gear 162, the 2nd speed gear train G2 is established. When the first shifter 166 is engaged with the 4th speed driven gear 165 in the condition where the second shifter 167 is not engaged with the 6th speed drive gear 162, the 4th speed gear train G4 is established. When the first shifter 166 is put into a neutral state and the second shifter 167 is engaged with the 6th speed drive gear 162, the 6th speed gear train G6 is established.

The 1st speed gear train G1, the 5th speed gear train G5 and the 3rd speed gear train G3 arrayed in this order from the opposite side of the clutch device 102 are provided between the projected part, projected from the other end part of the first main shaft 105, of the second main shaft 106 and the counter shaft 107. The 3rd speed gear train G3 is composed of a 3rd speed drive gear 168 relatively non-rotatably borne on the second main shaft 106 so as to be axially movable, and a 3rd speed driven gear 169 relatively rotatably borne on the counter shaft 107 and meshed with the 3rd speed drive gear 168. The 5th speed gear train G5 is composed of a 5th speed drive gear 170 relatively rotatably borne on the second main shaft 106, and a 5th speed driven gear 171 being relatively non-rotatably borne on the counter shaft 107 so as to be axially movale and being meshed with the 5th speed drive gear 170. The 1st speed gear train G1 is composed of a 1st speed drive gear 172 provided as one body with the second main shaft 106, and a 1st speed driven gear 173 relatively rotatably borne on the counter shaft 107 and meshed with the 1st speed drive gear 172.

The 3rd speed drive gear 168 is provided as one body with a third shifter 174, which is relatively non-rotatably and axially movably borne on the second main shaft 106. The thid shifter 174 can be switchedly engaged with and disengaged from the 5th speed drive gear. A fourth shifter 175 capable of switching between a state of being engaged with the 3rd speed driven gear 169, a state of being engaged with the 1st speed driven gear 173, and a neutral state of being engaged with neither the 3rd speed driven gear 169 nor the 1st speed driven gear 173, is relatively non-rotatably and axially movably borne on the counter shaft 107 between the 3rd speed driven gear 169 and the 1st speed driven gear 173. The fourth shifter 175 is integrally provided with the 5th speed driven gear 171.

When the fourth shifter 175 is engaged with the 1st speed driven gear 173 in the condition where the third shifter 174 is not engaged with the 5th speed drive gear 170, the 1st speed gear train G1 is established. When the fourth shifter 175 is engaged with the 3rd speed driven gear 169 in the condition where the third shifter 174 is not engaged with the 5th speed drive gear 170, the 3rd speed gear train G3 is established. When the fourth shifter 175 is put into the neutral state and the third shifter 174 is engaged with the 5th speed drive gear 170, the 5th speed gear train G5 is established.

The first to fourth shifters 166, 167, 174, 175 are rotatably held by first to fourth shift forks 176, 177, 178, 179. When the shift forks 176 to 179 are driven in the axial direction of both the main shafts 105, 106 and the counter shaft 107, the first to fourth shifters 166, 167, 174, 175 are operated in the axial direction.

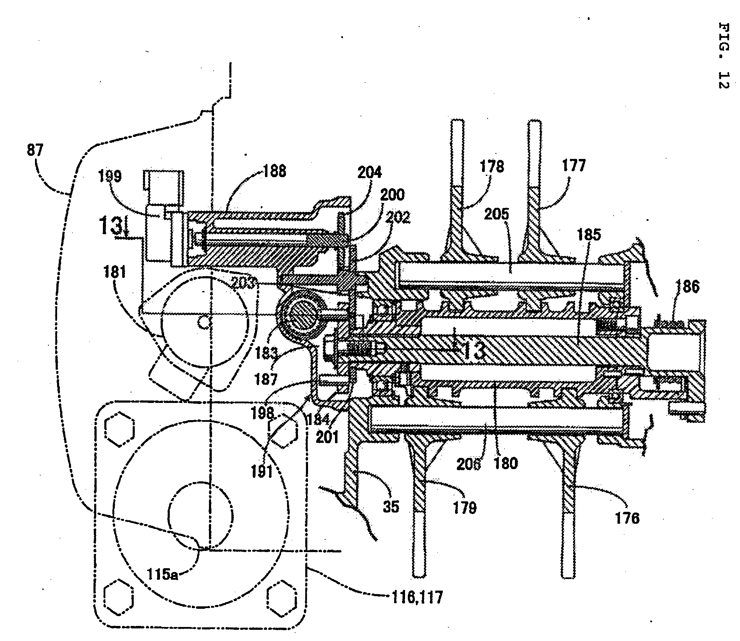

In FIG. 12, a shift drum 180 constituting a part of the gear speed change mechanism 103 is rotatably borne on the crankcase 35 while having an axis parallel to the axis of the crankshaft 36, and the first to fourth shift forks 176 to 179 are engaged with the outer periphery of the shift drum 180. In addition, the shift forks 176 to 179 are slidably borne on shift fork shafts 205, 206 supported on the crankshaft 35 while having axes parallel to the shift drum 180. According to turning of the shift drum 180, the shift forks 176 to 179 are slid on the shift fork shafts 205, 206.

With the shift drum 180 turned, the gear speed change mechanism 103 performs a speed change operation. A speed change controller 191 for controlling the speed change operation of the gear speed change mechanism 103 by changing the turning position of the shift drum 180 is mounted to the engine body 44 on the opposite side of the clutch device 102 with respect to the vehicle body center line CB, as shown in FIG. 2, in a direction along the axis of the crankshaft 36. In this embodiment, the speed change controller 191 is attached to a left side surface of the crankcase 35 in the condition where the engine body 33 is mounted on the body frame F.

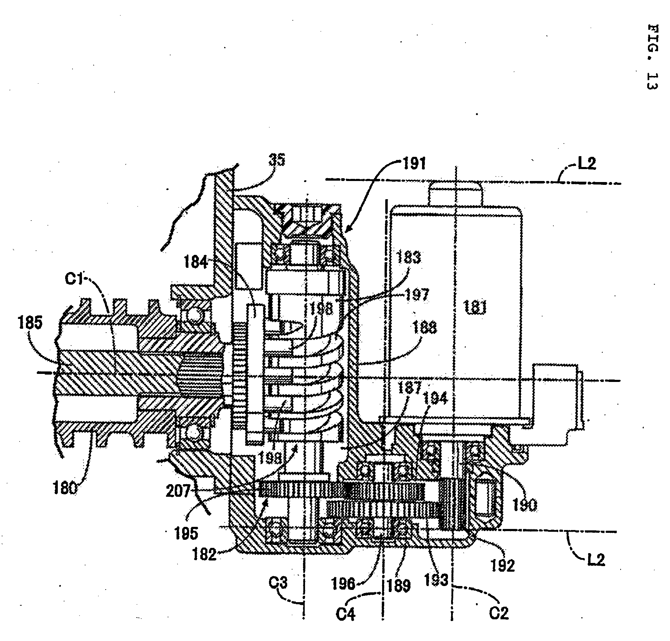

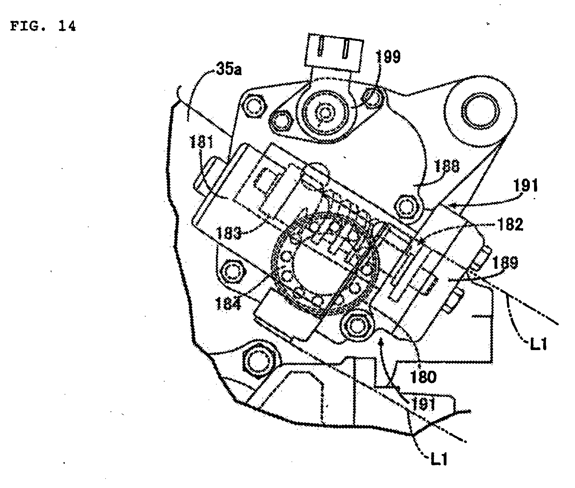

Referring to FIGS. 13 and 14 also, the speed change controller 191 includes an electric motor 181 for producing rotational power, and a power transmission device 207 for transmitting the rotational power of the electric motor 181 to the shift drum 180. At least a part of the power transmission device 207 and the electric motor 181 are disposed on a lateral side of the crankcase 35 on the side of one end in the axial direction of the shift drum 180.

The power transmission device 207 includes: a gear reduction mechanism 182 for transmitting the rotational power of the electric motor 181 so as to reduce the output rotating speed of the electric motor 181; a barrel cam 183 connected in conjunction to the gear reduction mechanism 182 so as to be rotated by the power transmitted from the gear reduction mechanism 182 and to convert the rotating motion into a turning motion of the shift drum 180; a circular disk-shaped power-transmitting rotary member 184 turned about the same axis of the shift drum 180 according to the rotation of the barrel cam 183; a power transmission shaft 185 relatively non-rotatably connected to the power-transmitting rotary member 184 and coaxially penetrating the shift drum 180 so as to permit relative turning of the shift drum 180; and a lost motion spring 186 provided between the power transmission shaft 185 and the shift drum 180. The gear reduction mechanism 182, the barrel cam 183 and the power-transmitting rotary member 184, of the power transmission device 207, are disposed on the left side of the crankcase 35.

A case member 188 for defining, between itself and the crankcase 35, an operating chamber 187 for containing the gear reduction mechanism 182, the barrel cam 183 and the power-transmitting rotary member 184 is fastened to a left side surface of the crankcase 35. A lid member 189 is attached to the case member 188 so as to close an open end of the case member 188. The electric motor 181 having its axis of rotation C2 disposed in a plane orthogonal to the axis of turning C1 of the shift drum 180 is attached to the case member 188 so that its motor shaft 190 projects into the operating chamber 187.

The barrel cam 183 is provided with a helical cam groove 197 in the outer periphery thereof. The axis of rotation C3 of the barrel cam 183 is disposed in a plane orthogonal to the axis of turning C1 of the shift drum 180, in the same manner as the electric motor 181 and the gear reduction mechanism 182, and is disposed in parallel to the axis of rotation C2 of the electric motor 181.

The gear reduction mechanism 182 includes: a drive gear 192 provided on the motor shaft 190 of the electric motor 181; a first intermediate gear 193 meshed with the drive gear 192; a second intermediate gear 194 rotated together with the first internal gear 193; and a driven gear 195 provided on the barrel cam 183 and meshed with the second intermediate gear 194. The axis of rotation of the gear reduction mechanism 182, i.e., the axes of rotation of the drive gear 192, the first intermediate gear 193, the second intermediate gear 194 and the driven gear 195 are disposed in planes orthogonal to the axis of rotation C1 of the shift drum 180, like in the case of the electric motor 181. Specifically, the axis of rotation of the drive gear 192 is coaxial with the electric motor 181, the axis of rotation of the driven gear 195 is coaxial with the barrel cam 183, and the axis of rotation C4 of the first intermediate gear 193 and the second intermediate gear 194 is disposed in a plane orthogonal to the axis of rotation C1 of the shift drum 180, like in the cases of the electric motor 181 and the barrel cam 183.

The first and second intermediate gears 193, 194 are provided on a rotary shaft 196 rotatably borne at both end parts thereof on the case member 188 and the lid member 189, and both end parts of the barrel cam 183 are rotatably borne on the case member 188 and the lid member 189.

On the other hand, the power-transmitting rotary member 184 is disposed oppositely to the outer periphery of the barrel cam 183 so as to be rotatable about the same axis as the shift drum 180. The power-transmitting rotary member 184 is provided, at regular intervals in the circumferential direction thereof, with a plurality of engaging pins 198, 198 which can be selectively engaged with the cam groove 197. When the plurality of engaging pins 198, 198 are sequentially engaged with the cam groove 197 and fed, according to the rotation of the barrel cam 183, the rotational power about the same axis as the shift drum 180 is transmitted to the power-transmitting rotary member 184.

One end part of the power transmission shaft 185 coaxially and relatively rotatably penetrating the shift drum 180 is coaxially and relatively non-rotatably connected to the power-transmitting rotary member 184. The lost motion spring 186 is provided between the other end part of the power transmission shaft 185 and the other end part of the shift drum 180, so that the turning force arising from the turning of the power transmission shaft 185 is transmitted to the shift drum 180 through the lost motion spring 186.

In order to detect the turning position of the shift drum 180, a shift sensor 199 is attached to the case member 188, and a detection shaft 200 of the shift sensor 199 is rotatably borne on the case member 188.

A third intermediate gear 202 is meshed with a drive gear 201 rotated together with the shift drum 180, and a driven gear 204 provided on the detection shaft 200 is meshed with a fourth intermediate gear 203 rotated together with the third intermediate gear 202.

Moreover, as clearly shown in FIG. 14, the electric motor 181 and the shift drum 180 are so disposed as to at least overlap with each other when viewed in the axial direction of the shift drum 180. In addition, the electric motor 181 and the barrel cam 183 are so disposed as to at least partly overlap with each other when viewed in the axial direction of the shift drum 180. Further, the electric motor 181, the barrel cam 183 and the shift drum 180 are so disposed as to at least partly overlap one another when viewed in the axial direction of the shift drum 180.

In addition, the maximum width of the electric motor 181 in the direction of the axis of rotation of the electric motor 181 is the distance between a pair of straight lines L1, L1 represented by chain lines in FIG. 14, and the barrel cam 183 is present between both the straight lines L1, L1 as viewed in the axial direction of the shift drum 180. Besides, the maximum width of the electric motor 181 in the direction along the axis of the electric motor 181 is the distance between straight lines L2, L2 represented by chain lines in FIG. 13, and, when viewed along the axial line of the shift drum 180, at least a part of the barrel cam 183 is included within the maximum width of the electric motor 181 in the direction along the axis of the electric motor 181.

Paying attention to FIG. 3, a water pump 208 is attached to a left side surface of the crankcase 35 on the lower side of the generator cover 87. First and second oil pumps 209 and 210 and a scavenging pump 211 are contained in the crankcase 35 coaxially with the water pump 208. The first and second oil pumps 209 and 210 and the scavenging pump 211 are rotated together with the water pump 208. The rotational power from the driven gear 129 of the primary reduction gears 101 is transmitted to the water pump 208, the first and second oil pumps 209, 210 and the scavenging pump 211 through an endless chain 212. As shown in FIGS. 10 and 11, a drive sprocket 213 relatively non-rotatably engaged with the driven gear 129 is rotatably borne on the first main shaft 105, and the chain 212 is wrapped around a driven sprocket 214, which is connected in common to the water pump 208, the first and second oil pump 209, 210 and the scavenging pump 211, and around the drive sprocket 213.

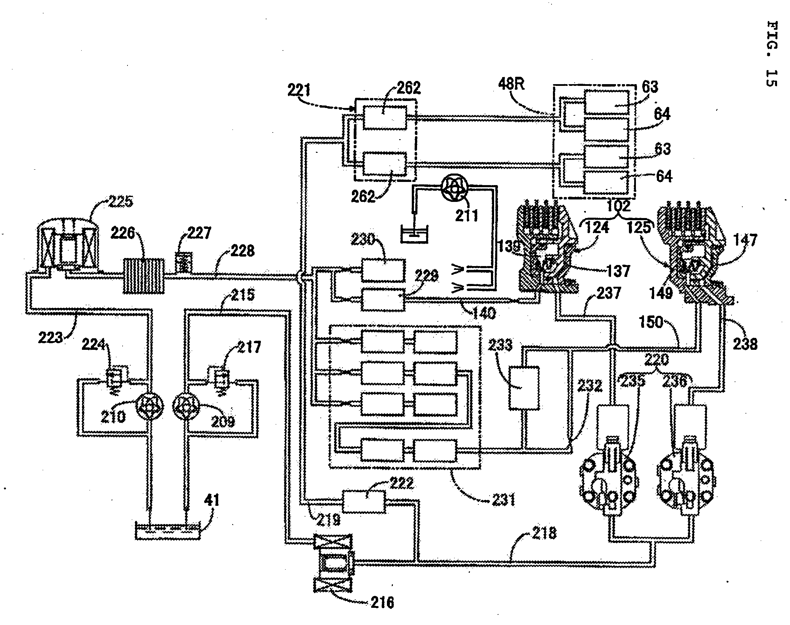

In FIG. 15, the first oil pump 209 discharges an oil pressure for switching the connected/disconnected state of the first and second clutches 124, 125 in the clutch device 102 and for performing change-over operations of the suction-side valve operation mode change mechanism 63 and the exhaust-side valve operation mode change mechanism 64 in the rear bank side valve-operating device 48R. The oil sucked up from the oil pan 41 and discharged from the first oil pump 209 is connected to a first oil filter 216 through an oil passage 215, and a relief valve 217 is connected to the oil passage 215. In addition, the oil cleaned by the first oil filter 216 flows dividedly through bifurcated first and second branch oil passages 218, 219. The first branch oil passage 218 is connected to a clutch controller 220 for switching the connected/disconnected state of the clutch device 105. The second branch oil passage 219 is connected to a valve-operating oil pressure controller 221 for performing change-over operations of the suction-side valve operation mode change mechanism 63 and the exhaust-side valve operation mode change mechanism 64 in the rear bank side valve-operating device 48R, and a pressure reducing valve 222 is intermediately provided in the second branch oil passage 219.

In addition, the second oil pump 210 is for supplying a lubricating oil to lubricated parts of the engine E. The oil sucked up from the oil pan 41 and discharged from the second oil pump 210 is connected to a second oil filter 225 through an oil passage 223, and a relief valve 224 is connected to an intermediate part of the oil passage 223. The oil clarified by the first oil filter 225 is led into an oil passage 228 in which an oil cooler 226 is intermediately provided, and a pressure sensor 227 is connected to the oil passage 228.

The oil from the oil passage 228 is supplied to lubricated parts 229 in the periphery of the first and second main shafts 105, 106 in the gear speed change mechanism 103, to lubricated parts 230 in the periphery of the counter shaft 107 in the gear speed change mechanism 103, and to a plurality of lubricated parts 231 in the engine body 33. Moreover, the oil from the lubricated parts 229 in the periphery of the first and second main shafts 105, 106 is led into a first oil passage 140 communicating with the canceller chamber 139 in the first clutch 124. In addition, the oil from the lubricated parts 231 is supplied through a restrictor 232 into a second oil passage 150 communicating with the canceller chamber 149 in the second clutch 125. A solenoid shut-off valve 233 for supplying the oil speedily into the canceller chamber 149 is connected in parallel to the restrictor 232.

Referring to FIG. 4 also, the clutch controller 220 is composed of a first solenoid control valve 235 for switching the action/release of an oil pressure on/from the first oil pressure chamber 137 in the first clutch 124, and a second solenoid control valve 236 for switching the action/release of an oil pressure on/from the second oil pressure chamber 147 in the second clutch 125. The clutch controller 220 is disposed on the right side of the cylinder block 38F, and is attached to an outside surface of the clutch cover 92. Moreover, the first and second solenoid control valves 235, 236 constituting the clutch controller 220 are disposed at positions different in the front-rear direction and in the vertical direction; specifically, of the first and second solenoid control valves 235, 236, the second solenoid control valve 236 is disposed above the first solenoid control valve 235.

The clutch cover 92 is provided with an oil passage 237 for connection between the first solenoid control valve 235 and the first oil passage 154 communicating with the first oil pressure chamber 137 in the first clutch 124, and with an oil passage 238 for connection between the second solenoid control valve 236 and the second oil passage 157 communicating with the second oil pressure chamber 147 in the second clutch 125.

The valve-operating oil pressure controller 221 is composed of a pair of solenoid control valve 262, 262 corresponding individually to the two cylinders in the rear bank BR, and, in the direction along the axis CC of the crankshaft 36, it is attached to the engine body 33 on the opposite side of the clutch device 102 with respect to the vehicle body center line CB, as shown in FIG. 2. In this embodiment, the valve-operating oil pressure controller 221 is attached to a left side surface of a rear cylinder head 39R in the rear bank BR, and the second branch oil passage 219 is provided in the crankcase 35 and the rear cylinder block 38R and the rear cylinder head 39R.

The solenoid control valve 262 on one side is for controlling the oil pressures in the intake-side and exhaust-side valve operation mode change mechanisms 63, 64 in one of the two cylinders, and the solenoid control valve 262 on the other side is for controlling the oil pressures in the intake-side and exhaust-side valve operation mode change mechanisms 63, 64 in the other of the two cylinders.

Now, the operation of this embodiment will be described below. The speed change controller 191 for turningly driving the shift drum 180 constituting a part of the gear speed change mechanism 103 and rotatably borne on the crankcase 35 so as to cause the gear speed change mechanism to perform a speed change operation includes the electric motor 181 for producing rotational power, and the power transmission device 207 for transmitting the rotational power of the electric motor 181 to the shift drum 180, wherein at least a part of the power transmission device 207 and the electric motor 181 are disposed on a lateral side (in this embodiment, the left side) of the crankcase 35 on the side of one end in the axial direction of the shift drum 180. In this case, the electric motor 181 and the shift drum 180 are do disposed as to at least partly overlap with each other when viewed in the axial direction of the shift drum 180. Therefore, it is possible to reduce the area occupied by the shift drum 180 and the electric motor 181 on a lateral side of the crankcase 35, and to further enhance the degree of freedom in laying out other component parts. Also, by laying out the electric motor 181 and the shift drum 180 close to each other, it is possible to reduce the power transmission device 207 in size and to contrive a reduction in weight.

Moreover, the power transmission device 207 includes the gear reduction mechanism 182 for transmitting the rotational power of the electric motor 181 while reducing the output rotating speed of the electric motor 181, and the barrel cam 183 connected in conjunction to the gear reduction mechanism 182 so as to be rotated by the power transmitted from the gear reduction mechanism 182 and to convert the rotating motion into a turning motion of the shift drum 180. The barrel cam 183 and the electric motor 181 disposed on a lateral side of the crankcase 35 on the side of one end in the axial direction of the shift drum 180 are so disposed as to at least partly overlap with each other when viewed along the axial direction of the shift drum 180. Therefore, it is possible to make small the area occupied by the electric motor 181 and the barrel cam 183 on the left side of the crankcase 35, and to enhance the degree of freedom in laying out other component parts.

In addition, since the barrel cam 183 is so disposed as to at least partly overlap with the shift drum 180 when viewed along the axial direction of the shift drum 180, it is possible to lay out the electric motor 181 and the barrel cam 183 close to each other on the side of the shift drum 180, to make small the area occupied by the electric motor 181 and the barrel cam 183 on the left side of the crankcase 35, to enhance the degree of freedom in laying out other component parts, to reduce the gear reduction mechanism 182 and the barrel cam 183 in size, and to contrive a reduction in weight.

Besides, since the axes of rotation of the electric motor 181, the gear reduction mechanism 182 and the barrel cam 183 are each disposed in a plane orthogonal to the axis of the shift drum 180, the protrusion of the electric motor 181, the gear reduction mechanism 182 and the barrel cam 183 from a side surface of the crankcase 35 can be suppressed. Especially, the protrusion amount of the electric motor 181, which protrudes most from the side surface of the crankcase 35, can be suppressed, thereby contributing to a reduction in the size of the engine E.

In addition, since the axis of rotation of the barrel cam 183 is parallel to the axis of rotation of the electric motor 181, the part of overlap of the electric motor 181 and the barrel cam 183 as viewed along the axial direction of the shift drum 180 can be set to be large, and the area occupied by the electric motor 181 and the barrel cam 183 on a lateral side of the crankcase 35 can be further reduced.

Besides, since the barrel cam 183 is so disposed that at least a part thereof is included within the maximum width of the electric motor 181 in the axial direction of the electric motor 181 when viewed along the axial direction of the shift drum 180, the area occupied by the electric motor 181 and the barrel cam 183 on a lateral side of the crankcase 35 can be further reduced. Further, since the motion conversion means which is rotated by the power transmitted from the gear reduction mechanism 182 and which converts the rotating motion into a turning motion of the shift drum 180 is the barrel cam 183 provided with the helical cam groove 197 in its outer periphery, it is possible to simplify the configuration of the motion conversion means and to further reduce the size of the motion conversion means.

Moreover, the valve-operating device 48R of the rear bank BR is additionally provided with the intake-side and exhaust-side valve operation mode change mechanisms 63, 64 capable of changing the operation modes of the intake valves 44 and the exhaust valves 45. The clutch device 102 for switching the making/breaking of power transmission between the crankshaft 36 and the gear speed change mechanism 103 provided in the course of the power transmission path for transmitting the rotational power of the crankshaft 36 to the rear wheel WR is disposed on a lateral side of the crankcase 35 on the side of one end of the crankshaft 36. A valve operation controller 221 for controlling the operations of the intake-side and exhaust-side valve operation mode change mechanisms 63, 64 and the speed change controller 191 for controlling the speed change operation of the gear speed change mechanism 103 are attached to the engine body 33. In this case, the valve operation controller 221 and the speed change controller 191 are attached to the engine body 33 on the opposite side of the clutch device 102 with respect to the vehicle center line CB, in the direction along the axis of the crankshaft 36. Thus, in the direction along the axis CC of the crankshaft 36, the valve operation controller 221 and the speed change controller 191 are attached to the engine body 33 on the opposite side of the clutch device 102, which is a heavyweight body. Therefore, the center of gravity of the power unit P can be prevented from being largely deviated to the side where the clutch device 102 is disposed. Consequently, the need to concentratedly dispose the vehicle component parts on the side opposite to the side of the clutch device 102 for the purpose of obtaining good balance of the center of gravity of the vehicle as a whole, and, accordingly, the degree of freedom in laying out the vehicle component parts can be enhanced.

In addition, since the valve operation controller 221 and the speed change controller 191 are attached to the left side surface of the engine body 33, maintenance of the valve operation controller 221 and the speed change controller 191 is facilitated. On the other hand, in the case where the valve operation controller 221 and the speed change controller 191 are attached to back surfaces of the cylinder blocks 39F and 39R in the engine body 33 or to an upper surface of the crankcase 35, maintenance cannot be said to be easy, since the exhaust system and/or the intake system serves as an obstacle.

Besides, the clutch cover 92 defining between itself and the crankcase 35 the clutch chamber 91 for accommodating the clutch device 102 is connected to the crankcase 35, and the clutch controller 220 for controlling the connection/disconnection operations of the clutch device 102 is attached to the clutch cover 92. Therefore, the clutch deice 102, the clutch cover 92 and the clutch controller 220 are laid out on one end side of the crankshaft 36, so that the power unit P is increased in weight at the part on one end side of the crankshaft 36. However, since the valve operation controller 221 and the speed change controller 191 are attached to the engine body 33 on the opposite side of the clutch device 102 in the direction along the axis of the crankshaft 36, the center of gravity of the power unit P can be prevented from being largely deviated toward the side where the clutch device 102, the clutch cover 92 and the clutch controller 220 are disposed. Consequently, the clutch device 102 and the clutch controller 220 can be disposed close to each other so as to be compact as a whole.

In addition, the generator 84 driven by the power transmitted from the crankshaft 36 is disposed on the opposite side of the clutch device 102 in the axial direction of the crankshaft 36, and a power generation voltage control driver 286 for controlling the power generation voltage of the generator 84 is attached to the generator cover 87 which is connected to the crankcase 35 so as to define between itself and the crankcase 35 the generator containing chamber 88 for accommodating the generator 84. This, in cooperation with the valve operation controller 221 and the speed change controller 191, makes it possible to prevent the center of gravity of the power unit P from being largely deviated toward the side where the clutch device 102 is disposed.

Further, the gear speed change mechanism 103 has the first and second main shafts 105 and 106 parallel to each other, and the single counter shaft 107 parallel to the main shafts 105, 106. In addition, the clutch device 102 is configured to be of the twin-clutch type, including the first clutch 124 interposed between the crankshaft 36 and the first main shaft 105, and the second clutch 125 interposed between the crankshaft 36 and the second main shaft 106. Therefore, the weight of the clutch device 102 is increased more. However, since the valve operation controller 221 and the speed change controller 191 are mounted to the engine body 33 on the opposite side of the clutch device 102 in the direction along the axis of the crankshaft 36, the center of gravity of the power unit P can be prevented from being largely deviated toward the side of the clutch device 102.

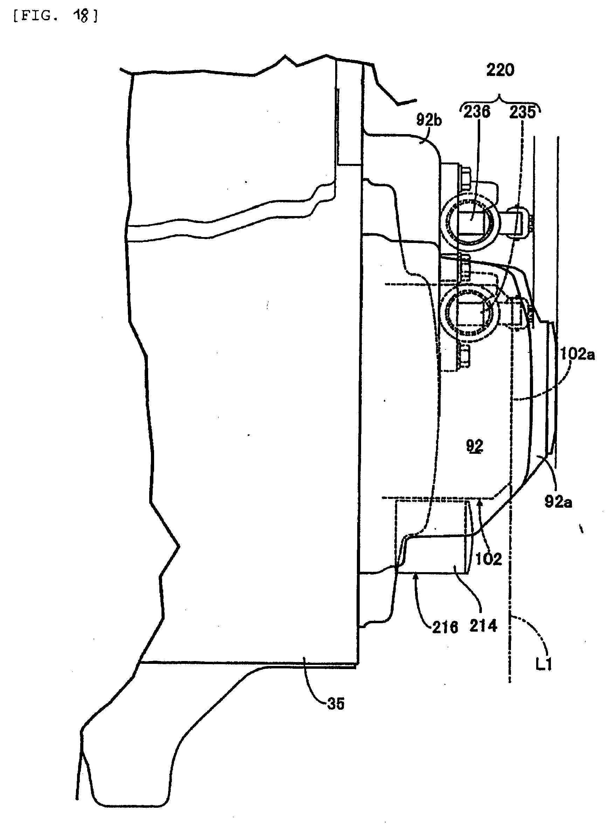

In addition, as Fig. 18 shows, the clutch apparatus 102 is attached to the outer surface of the extending portion 92b of the clutch cover 92, in a position located closer to the center than outermost end of the clutch cover 92, that is, protruding portion 92a.

An oil channel 237 and oil channel 238 are formed in the clutch cover 92. The oil channel 237 connects the first electromagnetic control valve 235 with the first oil channel 154, which is communicatively connected to the first hydraulic chamber 137 of the first clutch 124. Meanwhile, the oil channel 238 connects the second electromagnetic control valve 236 with the second oil channel 157, which is communicatively connected to the second hydraulic chamber 147 of the second clutch 125 (see also figure 15).

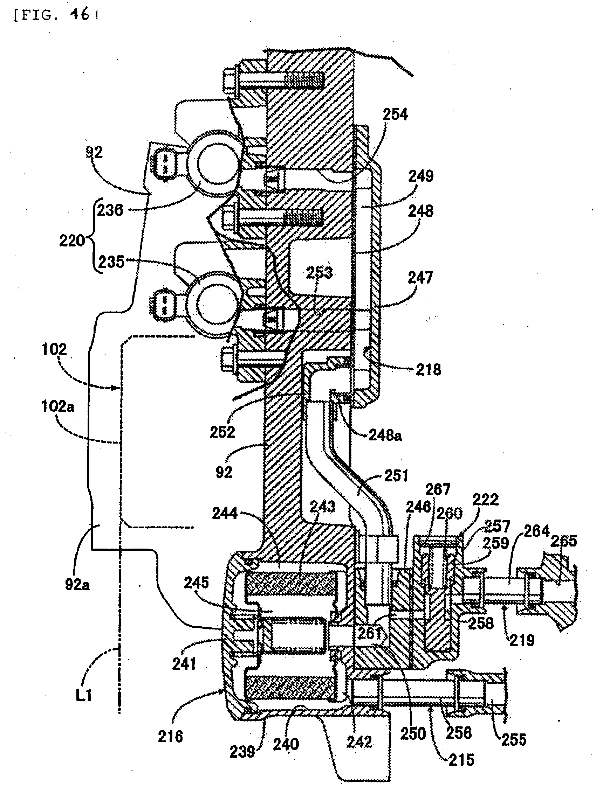

Referring to Fig. 16, the first oil filter 216 disposed in the clutch cover 92 is placed on the opposite side in the width direction of the vehicle-body frame F to the side stand 34. The first oil filter 216 is placed between the axis C2 of the crankshaft 36 and the axial line C3 of the clutch apparatus 102 in the front-and-rear direction and below these axes C2 and C3 in the up-and-down direction.

A filter case 239 of the first oil filter 216 protrudes outwards from the crankcase 35 of the engine main body 33. The filter case 239 is formed integrally with the clutch cover 92, and has a cylindrical shape that forms a bottomed housing hole 240 with its outer end open. A lid member 241 is fastened to the filter case 239 so as to close the opening portion at the outer end of the housing hole 240.

A support frame 242, which is held between the closed inner end portion of the housing hole 240 and the lid member 241, is installed in the filter case 239. A cylindrical filtration material 243 is supported by the support frame 242. A ring-shaped pre-purification chamber 244 is formed around the filtration material 243 while a purification chamber 245 is formed inside the filtration material 243.

The first oil filter 216 thus configured is disposed below the crankshaft 36 and farther to the center than the clutch apparatus 102 when viewed along the axial direction of the clutch apparatus 102. To be more specific, the first oil filter in this embodiment is disposed at a position located obliquely downward to the front from the clutch apparatus 102 as shown in Fig. 2. In the first oil filter 216 thus disposed, at least a part of the filtration material 243, which is a constituent element of the first oil filter 216, sticks out of the outer surface of the clutch cover 92 along the axial direction of the crankshaft 36, but the filtration material 243 is placed closer to the center than the outermost end of the protruding portion 92a of the clutch cover 92 when viewed from the axial direction of the clutch apparatus 102.

In addition, as Fig. 16 clearly shows, the first oil filter 216 is disposed in the clutch cover 92 so that a part of the first oil filter 216 is laid over the water pump 208, the first and the second oil pumps 209 and 210, and the scavenging pump 211 when viewed from a side.

Incidentally, as Figs. 16 and 18 show, the first oil filter 216 is located in a position closer to the center than a vertical line L1 which passes on an outer end 102a of the clutch apparatus 102 in the axial direction of the clutch apparatus 102 when viewed in the direction orthogonal to the axes of the crankshaft 36 and the clutch apparatus 102. In addition, as Fig. 15 shows, when viewed from a side of a direction along the axis of the crankshaft 36 and of the clutch apparatus 102, the first oil filter 216 is disposed so that a vertical line L2 passing on a forefront end 102b of the clutch apparatus 102 passes on the first oil filter 216. Accordingly, the first oil filter 216, in a plan view, is laid over a part of the clutch apparatus 102, and is disposed at a position closer to the center than the outer end 102a of the clutch apparatus 102 in the axial direction of the clutch apparatus 102.

A connection member 246 is fastened to the inner surface of the clutch cover 92 at a portion corresponding to the first oil filter 216. Meanwhile, an oil-channel formation member 247 is fastened to the inner surface of the clutch cover 92 at a position near the clutch control apparatus 220 and a flat-plate-shaped separation-wall member 248 is placed between the oil-channel formation member 247 and the clutch cover 92. An oil channel 249 is formed between the oil-channel formation member 247 and the separation-wall member 248. The connection member 246 forms a connection oil channel 250 that is communicatively connected to the purification chamber 245 of the first oil filter 216. A connection tube 251 extends towards the oil-channel formation member 247, and a first end of the connection tube 251 is liquid-tightly fitted to the connection oil channel 250. A second end of the connection tube 251 is fitted to a joint member 252, and the joint member 252 is liquid-tightly fitted to a cylindrical fitting pipe portion 248a formed in the separation-wall member 248. In addition, oil channels 253 and 254 are formed in the clutch cover 92. The oil channels 253 and 254 connect respectively the first and the second electromagnetic control valves 235 and 236 to the oil channel 249 located between the oil-channel formation member 247 and the separation-wall member 248.

Accordingly, the purification chamber 245 of the first oil filter 216 is connected to the connection oil channel 250, the connection tube 251, the joint member 252, the oil channel 249, and the oil channels 253 and 254. Here, the connection oil channel 250, the connection tube 251, the joint member 252, the oil channel 249, and the oil channels 253 and 254 form the first branch oil channel 218 described above with reference to Fig. 15.

The oil channel 215, which connects the pre-purification chamber 244 of the first oil filter 216 and the ejection port of the first oil pump 209, is composed of an oil channel 255 and a connection tube 256. The oil channel 255 is formed in the crankcase 35 and leads to the ejection port of the first oil pump 209. Meanwhile the connection tube 256 connects the oil channel 255 to the pre-purification chamber 244. An end of the connection tube 256 is liquid-tightly fitted to an end portion of the oil channel 255 and the other end of the connection tube is liquid-tightly fitted to the clutch cover 92.

A valve housing 257 of the pressure-reduction valve 222 sandwiches the connection member 246 with the inner surface of the clutch cover 92, and is coupled to the clutch cover 92 together with the connection member 246. The pressure-reduction valve 222 includes a valve body 259, which is slidably fitted into the valve housing 257. An oil chamber 258 is thus formed between the valve body 259 and a first end of the valve housing 257. Also included in the pressure-reduction valve 222 are: a spring-reception member 267, which is disposed on a second end side of the valve housing 257; and a spring 260, which is provided between the spring-reception member 267 and the valve body 259. The spring 260 biases the valve body 259 to a side so as to reduce the capacity of the oil chamber 258.

A channel 261 is formed in the connection member 246 and in the valve housing 257 and connects the oil channel 250 of the connection member 246 to the oil chamber 258. The passage 261 is the branching point of the first and the second branch oil channels 218 and 219.

The pressure-reduction valve 222 reduces the hydraulic pressure of the oil chamber 258 down to a determined level by reciprocal sliding movement of the valve body 259 to equilibrate the hydraulic force caused by the hydraulic pressure of the oil chamber 258 with the spring force of the spring 260. The hydraulic pressure reduced by the pressure-reduction valve 222 is introduced to the valve-lifting hydraulic control apparatus 221.

The above-described way of disposing the pressure-reduction valve 222 allows the pressure-reduction valve 222 to be placed in the close proximity to the first oil filter 216. In addition, as Fig. 13 clearly shows, when viewed from the axial direction of the first oil filter 216, at least a part of the pressure-reduction valve 222 can be laid over the first oil filter 216.

The valve-lifting hydraulic control apparatus 221 includes a pair of electromagnetic control valves 262, 262 corresponding respectively to the two cylinders of the rear-side bank BR, and is attached to the left-hand side surface of the rear-side cylinder head 39R of the rear-side bank BR.

One of the electromagnetic control valves 262, 262 controls the hydraulic pressure of the inlet-side and the exhaust-side valve-action-status changing mechanisms 63 and 64 of one of the two cylinders. Meanwhile, the other of the electromagnetic control valves 262, 262 controls the hydraulic pressure of the inlet-side and the exhaust-side valve-action-status changing mechanisms 63 and 64 of the other of the two cylinders.

The oil with a hydraulic pressure reduced by the pressure-reduction valve 222 is introduced to the valve-lifting hydraulic control apparatus 221 via a connection tube 264, an oil channel 265, and another oil channel 266. The connection tube 264 has its first end connected to the valve housing 257 and extends towards a side so as to move away from the clutch cover 92. The oil channel 265 is formed in the crankcase 35, and is connected to a second end of the connection tube 264, and extends to the left-hand side surface of the crankcase 35. The oil channel 266, on the other hand, is formed on the left-hand side-surface of the crankcase 35, the rear-side cylinder block 38R, and the rear-side cylinder head 39R. The oil channel 266 connects the oil channel 265 to the valve-lifting hydraulic control apparatus 221. The second branch oil channel 219, where the pressure-reduction valve 222 is installed, includes the connection tube 264, and the oil channels 265 and 266.

The second oil filter 225 is attached to the right-hand side surface of the crankcase 35 at a position located at the front of the first oil filter 216.

Next, the advantageous effects of the embodiment will be described. The shift-driving electric motor 181 to drive and control the gear-shift action of the speed change mechanism 103 is attached to the left-hand side surface of the crankcase 35.

Accordingly, the arrangement results in a higher degree of freedom in laying out the functional parts disposed around the crankcase 35, and results also in an easier access to the shift-driving electric motor 181 from the outer side of the power unit P. Thus, an easier maintenance work for the shift-driving electric motor 181 is achieved. In addition, the operational axis C1 of the shift-driving electric motor 181 is placed on a plane that is orthogonal to the axial direction of the shafts of the speed change mechanism 103. For this reason, though the shift-driving electric motor 181 is attached to the left-hand side surface of the crankcase 35, the amount of protrusion of the shift-driving electric motor 181 from the crankcase 35 can be reduced to the minimum.

In addition, the shaft end of the counter shaft 107 of the gear transmission mechanism 103 is covered with the first and the second gear covers 116 and 117, which are detachably attached to the left-hand side surface of the crankcase 35. The shift-driving electric motor 181 is attached to the left-hand side surface of the crankcase 35 at a position located above the first and the second gear covers 116 and 117 which stretches along the axial direction of the counter shaft 107 and also located at position closer to the center of engine than the first and the second gear covers 116 and 117. Accordingly, the actuator, that is, the shift-driving electric motor 181, is protected by the first and the second gear covers 116 and 117 from the kicked-up stones and splashed-up muddy water that come from below. As a consequence, no special parts dedicated only to the protection of the shift-driving electric motor 181 is necessary, and this reduces the number of component parts as a whole. Besides, such arrangement makes it no longer necessary to provide a boss or the like used to attach a protection cover at a position around the shift-driving electric motor 181. This eliminates a possible constraint that would otherwise be imposed by the boss or the like on the layout of the other component parts, and increases the degree of freedom in laying out the other component parts.

In addition, the generator cover 87 is also attached to the left-hand side surface of the crankcase 35. The shift-driving electric motor 181 is placed in a position located at the rear of the generator cover 87 and located closer to the center than the outer end of the generator cover 87 which stretches along the axial direction of the crankshaft 36. Accordingly, the shift-driving electric motor 181 can be disposed by making use of the space around the generator cover 87 sticking out from the left-hand side surface of the crankcase 35. This prevents the size of the power unit P from becoming larger, along the axial direction of the crankshaft 36, by the arrangement of the shift-driving electric motor 181. In addition, the generator cover 87 can be used to protect the shift-driving electric motor 181 from the kicked-up stones and splashed-up muddy water that come from the front-side of the vehicle. As a consequence, no special parts dedicated only to the protection of the shift-driving electric motor 181 is necessary, and this contributes to a reduction of the number of component parts as a whole. Besides, such arrangement makes it no longer necessary to provide a boss or the like used to attach a protection cover at a position around the shift-driving electric motor 181. This eliminates a possible constraint that would otherwise be imposed by the boss or the like on the layout of the other component parts, and increases the degree of freedom in laying out the other component parts.

In addition, the operational axis C1 of the shift-driving electric motor 181 is directed obliquely in the up-and-down direction. Accordingly when the shift-driving electric motor 181 is attached or detached, the work is not obstructed by the generator cover 87 located in front of the shift-driving electric motor 181. This makes the maintenance work for the shift-driving electric motor 181 easier.

The clutch cover 92 is attached to the right-hand side of the crankcase 35, and the clutch apparatus 102 is installed in the clutch cover 92. In addition, the clutch control apparatus 220, which controls the switching of the connecting and the disconnecting actions for the clutch apparatus 102, is attached to the outer surface of the clutch cover 92. Here, the clutch control apparatus 220 is disposed at the right-hand side of the front-side cylinder block 38F of the front-side bank BF. Accordingly, the clutch control apparatus 220 receives the traveling wind more efficiently. This results in a higher cooling performance for the clutch control apparatus 220 while the engine main body 33 is prevented from having a larger total length in the front-and-rear direction thereof. Moreover, component parts of the intake system or the vehicle constituent parts such as vehicle-body frame F are less likely to be placed in a portion corresponding to the outer surface of the clutch cover 92. Accordingly, the attachment of the clutch control apparatus 220 to the outer surface of the clutch cover 92 allows a higher degree of freedom in design for the component parts of the intake system, the vehicle-body frame F, and the like.

In addition, the clutch apparatus 102 is a twin-type clutch that includes the first and the second clutches 124 and 125. The clutch control apparatus 220 includes the first and the second electromagnetic control valves 235 and 236, by which the connection and disconnection of the first and the second clutches 124 and 125 are controlled individually. Moreover, the first and the second electromagnetic control valves 235 and 236 are placed at positions that are different from each other both in the front-and-rear direction and in the up-and-down direction. Accordingly, the first and the second electromagnetic control valves 235 and 236 receive the traveling wind more efficiently, and this results in an excellent cooling performance for the first and the second electromagnetic control valves 235 and 236.

In addition, of the first and the second electromagnetic control valves 235 and 236, the second electromagnetic control valve 236 is placed above the first electromagnetic control valve 235 and above the crankshaft 36 as well. Moreover, at least a part of (most of, in this embodiment) the first electromagnetic control valve 235 is placed in a position located at the front of the crankshaft 36. Accordingly, the clutch control apparatus 220 is placed in a space extending from a position located above the crankshaft 36 to a position located at the front of the crankshaft 36. Note that the above-mentioned space is larger than a space that is available between the crankshaft 36 and the clutch apparatus 102. In addition, the crankshaft 36 and the clutch apparatus 102 can be placed so that the distance between their respective shafts can be made shorter. Moreover, the first and the second electromagnetic control valve 235 and 236 receive the travelling air more efficiently.

The clutch control apparatus 220 is placed in a position closer to the center than outermost end of the clutch cover 92. Accordingly, the protruding of the clutch control apparatus 220 towards the right-hand side of the crankcase 35 can be reduced to the minimum. As a consequence, the location of the clutch control apparatus 220 does not pose a problem when the bank angle is considered.

In addition, the clutch control apparatus 220 is placed in a position closer to the center than the clutch apparatus 102 when viewed along the axial direction of the clutch apparatus 102. The clutch control apparatus 220 is attached to the outer surface of the clutch cover 92 while avoiding the clutch apparatus 102 that protrudes most towards the right-hand side of the crankcase 35. Accordingly, the power unit P is prevented from becoming larger in size in the right-and-left direction thereof as much as possible.

Moreover, the oil channels 237 and 238, which connect the hydraulic-type clutch apparatus 102 to the clutch control apparatus 220 that controls the hydraulic pressure to be applied to the clutch apparatus 102, are formed in the clutch cover 92. Accordingly, the oil channels 237 and 238 can be shortened, and thus can be simplified. In addition, the maintenance for mechanism that controls the clutch apparatus 102 is made more easily.

Incidentally, the first oil filter 216 is disposed in the clutch cover 92. The first oil filter is placed at a position located between the axis C2 of the crankshaft 36 and the axis C3 of the clutch apparatus 102 in the front-and-rear direction, and located below the axes C2 and C3 in the up-and-down direction. Accordingly, the first oil filter 216 is disposed by taking advantage of the space that is available below the position between the crankshaft 36 and the clutch apparatus 102. Such a way of disposing the first oil filter 216 helps to secure a certain degree of freedom in design for the component parts placed above the crankshaft 36, such as the inner diameter of each cylinder bore 42, and the location of the timing , transmission mechanisms 95 and 98, all of which are located above the crankshaft 36. In addition, in a space below the position located between the axis C2 of the crankshaft 36 and the axis C3 of the clutch apparatus 102, a larger space is available on the side close to the engine main body 33. Accordingly, the protruding of the first oil filter 216 along the axial direction of the crankshaft 36 can be reduced without imposing a constraint on the degree of freedom in the location of the other component parts. In addition, the placing of the first oil filter 216 below the crankshaft 36 allows the motorcycle to have a lower gravity center.

In addition, the first oil filter 216 is placed in a position located closer to the center than the outer end 102a of the clutch apparatus 102 in the axial direction thereof so that the first oil filter 216, in the plan view, is laid over on a part of the clutch apparatus 102. Accordingly, the power unit P is prevented from becoming larger in the axial direction of the crankshaft 36 because of the attaching of the first oil filter 216. In addition, the protruding of the first oil filter 216 from the clutch cover 92 is prevented from affecting the bank angle.

In addition, the first oil filter 216 is placed in a position located below the crankshaft 36 and located farther to the center than of the clutch apparatus 102 when viewed along the axial direction of the clutch apparatus 102. Here, at least a part of the filtration material 243, which is a constituent element of the first oil filter 216, sticks outwards from the outer surface of the clutch cover 92 along the axial direction of the crankshaft 36. Accordingly, the first oil filter receives the travelling air more efficiently. This results in a higher cooling performance for the first oil filter 216.

In addition, the first oil filter 216 is placed so that a part of the first oil filter 216 is laid over the water pump 208, the first and the second oil pumps 209 and 210, and the scavenging pump 211 when viewed from a side. Accordingly, the first oil pump 209 and the first oil filter 216 can be placed in a close proximity to each other. This makes it possible to shorten and simplify the oil channel 215 connecting the first oil pump 209 to the first oil filter 216.

In addition, the oil channels 237 and 238 connect the clutch apparatus 102 and the clutch control apparatus 220 that controls the hydraulic pressure applied to the clutch apparatus 102. The oil channels 237 and 238 are formed in the clutch cover 92. Accordingly, the clutch control apparatus 220 and the oil channels 237 and 238 that connect the clutch apparatus 102 to the clutch control apparatus 220 are disposed so as to be aggregated in the clutch cover 92. As a consequence, the oil channels 237 and 238 can be shortened and simplified while the maintenance work for the mechanisms to control the clutch apparatus 102 can be made easier.

In addition, the first oil filter 216 is placed at the opposite side of the vehicle frame F in the width direction thereof to the side stand 34. Accordingly, the maintenance work and the like done while the motorcycle is parked on the side stand becomes easier.

In addition, the pressure-reduction valve 222, which is installed in the course of the second branch oil channel 219 connecting the first oil filter 216 to the valve-lifting hydraulic control apparatus 221, is placed at a position in the close proximity to the first oil filter 216. Accordingly, while efficient use of the necessary hydraulic pressure is achieved, the pressure-reduction valve 222 and the first oil filter 216 are placed within a compact area.

In addition, the substantially cylindrical filter case 239 of the first oil filter 216 is attached to the crankcase 35 so as to stick outwards from the crankcase 35. At least a part of the pressure-reduction valve 222 is laid over the first oil filter 216 when viewed from the axial direction of the filter case 239. Accordingly, the pressure-reduction valve 222 and the first oil filter 216 are placed in a closer proximity to each other, and this contributes to the achievement of a more compact power unit P.

In addition, the first oil filter 216 and the pressure-reduction valve 222 are disposed in the clutch cover 92, which is attached to the crankcase 35. This results in a higher assembling performance. Moreover, the power unit P which includes the pressure-reduction valve 222 and the first oil filter 216 and a power unit which includes no pressure-reduction valves or no oil filters can use the identical engine main body 33. Thus, manufacturing of the two types of engines are made easier.

In addition, the ejection port of the first oil pump 209 is connected to all of the inlet-side and the exhaust-side valve-action-status changing mechanisms 63 and 64, and the clutch apparatus 102. Accordingly, the power unit P is prevented from becoming bulky. In addition it is possible to achieve a compact hydraulic system related to the inlet-side and the exhaust-side valve-action-status changing mechanisms 63 and 64, and the clutch apparatus 102. The power unit P, as a consequence, can be made suitable for motorcycles.

In addition, the pressure-reduction valve 222 is installed in the course of the second branch oil channel 219 which is communicatively connected to the valve-lifting hydraulic control apparatus 221 of the two hydraulic control mechanisms; the clutch control apparatus 220 and the valve-lifting hydraulic control apparatus 221. Accordingly, an appropriate and efficient control can be achieved for the hydraulic pressure of the clutch control apparatus 220 and for the hydraulic pressure of the valve-lifting hydraulic control apparatus 221.

In addition, the first and the second branch oil channels 218 and 219 branch out from the first oil pump 209 and are communicatively connected to the clutch control apparatus 220 and the valve-lifting hydraulic control apparatus 221. The pressure-reduction valve 222 is installed in the course of the second branch oil channel 219 of the two oil channels. Accordingly, an appropriate and efficient hydraulic system which adds suitable hydraulic pressure to the clutch control apparatus 220 and the valve-lifting hydraulic control apparatus 221 can be achieved.

In addition, the inlet-side and the exhaust-side valve-action-status changing mechanisms 63 and 64 can be operated to switch by means of a lower hydraulic pressure than in the case of the clutch apparatus 102. The hydraulic pressure to be supplied to the inlet-side and the exhaust-side valve-action-status changing mechanisms 63 and 64 is obtained by decreasing the hydraulic pressure of the oil ejected from the first oil pump 209 by means of the pressure-reduction valve 222. Accordingly, each hydraulic pressures that are appropriate for the inlet-side and the exhaust-side valve-action-status changing mechanisms 63 and 64, and for the clutch apparatus 102 can be applied, respectively.

While one embodiment of the present invention has been described above, the invention is not limited to the above-described embodiment, and various design modifications are possible within the scope of the invention as set forth in the claims. For example, while the transmission for motorcycle has been described in the above embodiment, the present invention is applicable not only to transmissions of motorcycles but also to transmissions of three-wheel vehicles or other saddle ride type vehicles.

### Reference Numerals

33 ENGINE MAIN BODY
35 CRANKCASE
36 CRANKSHAFT
44 INTAKE VALVE
45 EXHAUST VALVE
48R VALVE-OPERATING DEVICE
63, 64 VALVE OPERATION MODE CHANGE MECHANISM
84 GENERATOR
87 GENERATOR COVER
88 GENERATOR CHAMBER
91 CLUTCH CHAMBER
92 CLUTCH COVER
102 CLUTCH DEVICE
103 SPEED CHANGE MECHANISM
105 FIRST MAIN SHAFT
106 SECOND MAIN SHAFT
107 COUNTER SHAFT AS OUTPUT SHAFT
103 GEAR TRANSMISSION MECHANISM AS TRANSMISSION MECHANISM
116 FIRST GEAR COVER AS COVER
117 SECOND GEAR COVER AS COVER
124 FIRST CLUTCH
125 SECOND CLUTCH
180 SHIFT DRUM
181 SHIFT-DRIVING ELECTRIC MOTOR AS SHIFT ACTUATOR
182 GEAR REDUCTION MECHANISM AS SPEED REDUCTION MEANS
183 BARREL CAM AS MOTION CONVERSION MEANS
191 SPEED CHANGE CONTROLLER
197 CAM GROOVE
220 CLUTCH CONTROLLER
221 VALVE OPERATION CONTROLLER
286 POWER GENERATION VOLTAGE CONTROL DRIVER
CB VEHICLE BODY CENTER LINE
E ENGINE
P POWER UNIT
WR REAR WHEEL AS DRIVE WHEEL

## Claims

1. A structure wherein a shift actuator is disposed in a power unit for a saddle-ride
type vehicle, the structure comprising:
an engine (E) with an engine main body (33);
a crankcase (35) forming a part of the engine main body (33);
a crankshaft (36) rotatably supported by the crankcase (35);
a transmission mechanism (103) disposed in the course of power transmission from the crankshaft (36) to a drive wheel (WR) and installed in the crankcase (35);
a shift actuator (181) which drives and controls the gear-shifting action of the transmission mechanism (103) and which is disposed in the engine main body (33), the shift actuator (181) being attached to a side surface of the crankcase (35) with the operational axis of the shift actuator (181) being placed in a plane that is orthogonal to the axial direction of the transmission mechanism (103), **characterized in that**
the engine (E) further comprises a valve-operating device (48R) provided additionally with valve operation mode change mechanisms (63, 64) capable of changing operation modes of engine valves (44, 45),
a clutch device (102) for switching the making/breaking of power transmission between said crankshaft (36) and the transmission mechanism (103),
said clutch device (102) disposed on a lateral side of said crankcase (35) on the side of one end of said crankshaft (36),
a valve operation controller (221) for controlling,the operations of said valve operation mode change mechanisms (63, 64), and
a speed change controller (191) for controlling a gear change operation of said transmission mechanism (103),
said valve operation controller (221) and said speed change controller (191) being attached to the engine body (33) inclusive of said crankcase (35),
wherein said valve operation controller (221) and said speed change controller (191) are attached to said engine body (33) on the opposite side of said clutch device (102) with respect to a vehicle body center line (CB) in a direction along the axis of said crankshaft (36).

2. The structure according to claim 1,
wherein the shaft end of an output shaft (107) is covered with a cover (116, 117) that is detachably attached to a side surface of the crankcase (35), the output shaft (107) forming a part of the transmission mechanism (103) such that the torque transmitted from the crankshaft (36) to the transmission mechanism (103) is outputted towards the drive wheel (WR) though the output shaft (107), and
the shift actuator (181) is attached to the side surface of the crankcase (35) in a position located above the cover (116, 117) and located closer to the center than the outer ends of the cover (116, 117) extending along the axial direction of the output shaft (107).

3. The structure according to any one of claims 1 and 2 further comprising:
a generator cover (87) attached to the side surface of the crankcase (35);
a generator chamber (88) formed by the generator cover (87); and
a generator (84) which is connected to the crankshaft (36) and which is installed in the generator chamber (88), wherein
the shift actuator (181) is attached to the side surface of the crankcase (35) so as to be placed in a position located at the rear of the generator cover (87) and located closer to the center than the outer end of the generator cover (87) extending along the axial direction of the crankshaft (36).

4. The structure according to claim 3,
wherein the shift actuator (181) is attached to the side surface of the crankcase (35) while the operational axis of the shift actuator (181) is directed obliquely in the up-and-down direction.

5. The structure according to claim 1,
wherein said valve operation controller (221) and said speed change controller (191) are attached to a side surface, along said vehicle body center line (CB), of said engine body (33).

6. The structure according to claim 4 or 5,
wherein a clutch cover (92) defining between itself and said crankcase (35) a clutch chamber (91) for containing said clutch device (102) is connected to said crankcase (35), and a clutch controller (220) for controlling connection/disconnection operations of said clutch device (102) is attached to said clutch cover (92).

7. The structure according to claim 4 or claim 6 when dependent on claim 4
wherein the generator (84) driven by power transmitted from said crankshaft (36) is disposed on the opposite side of said clutch device (102) in the axial direction of said crankshaft (36), and a power generation voltage control driver (286) for controlling a power generation voltage of said generator (84) is attached to the inside of the generator cover (87).

8. The structure according to any of claims 4 to 7,
wherein said transmission mechanism (103) includes first and second input shafts (105, 106) parallel to each other and parallel to the output shaft (107), and said clutch device (102) is configured to be of a twin-clutch type, including a first clutch (124) interposed between said crankshaft (36) and said first input shaft (105), and a second clutch (125) interposed between said crankshaft (36) and said second input shaft (106).

9. The structure according to any of the preceding claims,
wherein the transmission mechanism (103) comprises a shift drum (180) being turnably mounted by the crankcase (35), and
wherein the speed change controller'(191) is configured to drive said shift drum (180) to turn so as to cause said transmission mechanism (103) to perform a gear change operation, said speed change controller (191) including a power transmission device (207) configured to transmit a rotational power of the shift actuator (181) to said shift drum (180), with said shift actuator (181) and at least a part of said power transmission device (207) being disposed on a lateral side of said crankcase (35) on the side of one end in the axial direction of said shift drum (180), wherein said shift actuator (181) and said shift drum (180) are so disposed as to at least partly overlap with each other when viewed along the axial direction of said shift drum (180).

10. The structure according to claim 9,
wherein said power transmission device (207) includes a speed reduction means (182) for transmitting said rotational power of said shift actuator (181) while reducing the output rotating speed of said shift actuator (181), and a motion conversion means (183) connected in a conjunction manner to said speed reduction means (182) so as to be rotated by the power transmitted from said speed reduction means (182) and to convert the rotating motion into a turning motion of said shift drum (180), and said motion conversion means (183) and said shift actuator (181) disposed on a lateral side of said crankcase (35) on the side of one end in the axial direction of said shift drum (180) are so disposed as to at least partly overlap with each other when viewed along the axial direction of said shift drum (180).

11. The structure according to claim 10,
wherein the motion conversion means (183) is so disposed as to at least partly overlap with said shift drum (180) when viewed along the axial direction of said shift drum (180).

12. The structure according to claim 10 or 11,
wherein rotational axes of said shift actuator (181), said speed reduction means (182) and said motion conversion means (183) are disposed in a plane orthogonal to the axis of said shift drum (180).

13. The structure according to any of claims 10 to 12, wherein
said motion conversion means (183) is disposed so that its rotational axis is parallel to the rotational axis of said shift actuator (181).

14. The structure according to any of claims 10 to 13, wherein
said motion conversion means (183) is so disposed that at least a part thereof is included within a maximum width of said shift actuator (181) in the axial direction of shift actuator (181) when viewed along the axial direction of said shift drum (180).

15. The structure according to any of claims 10 to 14,wherein
said motion conversion means (183) is a barrel cam which is provided in its outer periphery with a helical cam groove (197).

## Patentansprüche

1. Struktur, wobei ein Schaltaktuator in einer Leistungseinheit für ein Fahrzeug des Sattelsitztyps angeordnet ist, wobei die Struktur aufweist:
einen Motor (E) mit einem Motorhauptkörper (33);
ein Kurbelgehäuse (35), das einen Teil des Motorhauptkörpers (33) bildet;
eine rotierbar durch das Kurbelgehäuse (35) gehaltene Kurbelwelle (36);
einen Getriebemechanismus (103), der im Verlauf der Leistungsübertragung von der Kurbelwelle (36) auf ein Antriebsrad (WR) angeordnet ist und im Kurbelgehäuse (35) installiert ist;
ein Schaltaktuator (181), der die Gangschaltaktion des Getriebemechanismus (103) antreibt und steuert, und der im Motorhauptkörper (33) angeordnet ist, wobei der Schaltaktuator (181) an einer Seitenfläche des Kurbelgehäuses (35) befestigt ist, wobei die Betätigungsachse des Schaltaktuators (181) in einer Ebene angeordnet ist, die orthogonal zur axialen Richtung des Getriebemechanismus (103) verläuft,
**dadurch gekennzeichnet dass**,
der Motor (E) weiterhin eine ein Ventil betreibende Vorrichtung (48R) aufweist, die zusätzlich zu den Ventilbetriebsmodus-Änderungsmechanismen (63, 64) vorgesehen ist, die zum Ändern der Betriebsmodi der Motorventile (44, 45) ausgestaltet ist,
eine Kupplungsvorrichtung (102) zum Wechseln des Herstellens/Unterbrechens der Leistungsübertragung zwischen der Kurbelwelle (36) und dem Getriebemechanismus (103),
die Kupplungsvorrichtung (102) an einer seitlichen Seite des Kurbelgehäuses (35) an der Seite eines Endes der Kurbelwelle (36) angeordnet ist,
eine Ventilbetriebs-Steuereinheit (221) zum Steuern der Operationen der Ventilbetriebsmodus-Änderungsmechanismen (63, 64) und
eine Geschwindigkeitsänderungs-Steuereinheit (191) zum Steuern einer Gangwechseloperation des Getriebemechanismus (103),
wobei die Ventilbetriebs-Steuereinrichtung (221) und die Geschwindigkeitsänderungs-Steuereinrichtung (191) am Motorkörper (33) einschließlich dem Kurbelgehäuse (35) angebracht sind,
wobei die Ventilbetriebs-Steuereinrichtung (221) und die Geschwindigkeitsänderungs-Steuereinrichtung (191) am Motorkörper (33) an der gegenüberliegenden Seite der Kupplungsvorrichtung (102) bezüglich einer Karosseriemittellinie (CB) in einer Richtung entlang der Achse der Kurbelwelle (36) angeordnet sind.

2. Struktur nach Anspruch 1,
wobei das Wellenende einer Ausgangswelle (107) mit einer Abdeckung (116, 117) abgedeckt ist, die entfernbar an einer Seitenfläche des Kurbelgehäuses (35) angebracht ist, wobei die Ausgangswelle (107) einen Teil des Getriebemechanismus (103) bildet, sodass das von der Kurbelwelle (36) auf den Getriebemechanismus (103) übertragene Drehmoment auf das Antriebsrad (WR) über die Ausgangswelle (107) übertragen wird, und
der Schaltaktuator (181) an der Seitenfläche des Kurbelgehäuses (35) in einer über der Abdeckung (116, 117) angeordneten Position angebracht ist und sich näher an der Mitte als an den äußeren Enden der Abdeckung (116, 117) befindet, die sich in der axialen Richtung der Ausgangswelle (107) erstreckt.

3. Struktur nach einem der Ansprüche 1 und 2, die weiterhin aufweist:
eine Lichtmaschinenabdeckung (87), die an der Seitenfläche des Kurbelgehäuses (35) befestigt ist;
eine Lichtmaschinenkammer (88), die durch die Lichtmaschinenabdeckung (87) ausgebildet ist; und
eine Lichtmaschine (84), die mit der Kurbelwelle (36) verbunden ist, und die in der Lichtmaschinenkammer (88) eingebaut ist, wobei
der Schaltaktuator (181) an der Seitenfläche des Kurbelgehäuses (35) befestigt ist, sodass er in einer Position angeordnet ist, die sich an der Rückseite der Lichtmaschinenabdeckung (87) befindet und näher an der Mitte als am äußeren Ende der Lichtmaschinenabdeckung (87) befindet, die sich in der axialen Richtung der Kurbelwelle (36) erstreckt.

4. Struktur nach Anspruch 3,
wobei der Schaltaktuator (181) an der Seitenfläche des Kurbelgehäuses (35) befestigt ist, während die Betätigungsachse des Schaltaktuators (181) schräg von oben nach unten ausgerichtet ist.

5. Struktur nach Anspruch 1,
wobei die Ventilbetriebs-Steuereinheit (221) und die Geschwindigkeitswechsel-Steuereinheit (191) an einer Seitenfläche entlang der Karosseriemittellinie (CB) des Motorkörpers (33) befestigt sind.

6. Struktur nach Anspruch 4 oder 5,
wobei eine Kupplungsabdeckung (92), die zwischen sich und dem Kurbelgehäuse (35) eine Kupplungskammer (91) zur Aufnahme der Kupplungsvorrichtung (102) definiert, mit dem Kurbelgehäuse (35) verbunden ist, und eine Kupplungssteuereinheit (220) zum Steuern der Verbindungs-/Löseoperationen der Kupplungsvorrichtung (102) an der Kupplungsabdeckung (92) befestigt ist.

7. Struktur nach Anspruch 4 oder 6, wenn von Anspruch 4 abhängig,
wobei die Lichtmaschine (84), die von der über die Kurbelwelle übertragenen Leistung angetrieben wird, an der gegenüberliegenden Seite der Kupplungsvorrichtung (102) in axialer Richtung der Kurbelwelle (36) angeordnet ist, und ein Stromerzeugungs-Spannungs-Steuerungstreiber (286) zum Steuern einer Spannung bei der Stromerzeugung der Lichtmaschine (84) an der Innenseite der Lichtmaschinenabdeckung (87) angebracht ist.

8. Struktur nach einem der Ansprüche 4 bis 7,
wobei der Übertragungsmechanismus (103) erste und zweite Eingangswellen (105, 106) parallel zueinander und parallel zur Ausgangswelle (107) aufweist, und die Kupplungsvorrichtung (102) dazu ausgestaltet ist, von einem Doppelkupplungstyp zu sein, einschließlich einer ersten Kupplung (124), die zwischen der Kurbelwelle (36) und der ersten Eingangswelle (105) angeordnet ist, und einer zweiten Kupplung (125), die zwischen der Kurbelwelle (36) und der zweiten Eingangswelle (106) angeordnet ist.

9. Struktur nach einem der vorhergehenden Ansprüche,
wobei der Getriebemechanismus (103) eine Schalttrommel (180) aufweist, die drehbar durch das Kurbelgehäuse (35) befestigt ist, und
wobei die Geschwindigkeitsänderungs-Steuereinheit (191) dazu ausgestaltet ist, die Schalttrommel (180) zum Drehen anzutreiben, um so zu bewirken, dass der Getriebemechanismus (103) eine Gangwechseloperation durchführt, wobei die Geschwindigkeitsänderungs-Steuereinheit (191) eine Leistungsübertragungsvorrichtung (207) aufweist, die dazu ausgestaltet ist, eine Rotationskraft vom Schaltaktuator (181) auf die Schalttrommel (180) zu übertragen, wobei der Schaltaktuator (181) und wenigstens ein Teil der Leistungsübertragungsvorrichtung (207) auf einer seitlichen Seite des Kurbelgehäuses (35) an der Seite von einem Ende in axialer Richtung der Schalttrommel (180) angeordnet sind, wobei der Schaltaktuator (181) und die Schalttrommel (180) so angeordnet sind, dass sie einander in der axialen Richtung der Schalttrommel (180) betrachtet wenigstens teilweise überlappen.

10. Struktur nach Anspruch 9,
wobei die Leistungsübertragungsvorrichtung (207) ein Geschwindigkeitsverringerungsmittel (182) zum Übertragen der Rotationskraft auf den Schaltaktuator (181) aufweist, während die
Ausgaberotationsgeschwindigkeit des Schaltaktuators (181) verringert wird, und ein Bewegungsumwandlungsmittel (183), das in zusammenhängender Weise mit dem Geschwindigkeitsverringerungsmittel (182) verbunden ist, um so von der vom Geschwindigkeitsverringerungsmittel (182) übertragenen Leistung rotiert zu werden und die Rotationsbewegung in eine Drehbewegung der Schalttrommel (180) umzuwandeln, und wobei das Bewegungsumwandlungsmittel (183) und der Schaltaktuator (181), der an einer seitlichen Seite des Kurbelgehäuses (35) auf der Seite von einem Ende in der axialen Reitrichtung der Schalttrommel (180) angeordnet ist, so angeordnet sind, dass sie einander in der axialen Richtung der Schalttrommel (180) betrachtet wenigstens teilweise überlappen.

11. Struktur nach Anspruch 10,
wobei das Bewegungsumwandlungsmittel (183) so angeordnet ist, dass es in der axialen Richtung der Schalttrommel (180) betrachtet wenigstens teilweise mit der Schalttrommel (180) überlappt.

12. Struktur nach Anspruch 10 oder 11,
wobei die Rotationsachsen des Schaltaktuators (181), des Geschwindigkeitsverringerungsmittels (182) und des Bewegungsumwandlungsmittels (183) in einer orthogonal zur Achse der Schalttrommel (180) verlaufenden Ebene angeordnet sind.

13. Struktur nach einem der Ansprüche 10 bis 12, wobei:
das Bewegungsumwandlungsmittel (183) so angeordnet ist, dass die Rotationsachse davon parallel zur Rotationsachse des Schaltaktuators (181) angeordnet ist.

14. Struktur nach einem der Ansprüche 10 bis 13, wobei:
das Bewegungsumwandlungsmittel (183) so angeordnet ist, dass in der axialen Richtung der Schalttrommel (180) betrachtet wenigstens ein Teil davon in einer maximalen Breite des Schaltaktuators (181) in der axialen Richtung des Schaltaktuators (181) enthalten ist.

15. Struktur nach einem der Ansprüche 10 bis 14, wobei:
das Bewegungsumwandlungsmittel (183) eine Kurventrommel ist, bei der in einem Außenumfang davon eine spiralförmige Kurvennut (197) vorgesehen ist.

## Revendications

1. Structure dans laquelle un actionneur de changement est disposé dans une unité de puissance pour un véhicule de type à selle, la structure comprenant :
un moteur (E) avec un corps principal de moteur (33) ;
un carter de vilebrequin (35) faisant partie du corps principal de moteur (33) ;
un vilebrequin (36) supporté avec faculté de rotation par le carter de vilebrequin (35) ;
un mécanisme de transmission (103) disposé dans le chemin de transmission de puissance allant du vilebrequin (36) à une roue motrice (WR) et installé dans le carter de vilebrequin (35) ;
un actionneur de changement (181) qui entraîne et commande l'action de changement de vitesse du mécanisme de transmission (103) et qui est disposé dans le corps principal de moteur (33), l'actionneur de changement (181) étant attaché à une surface latérale du carter de vilebrequin (35) avec l'axe opérationnel de l'actionneur de changement (181) placé dans un plan qui est orthogonal à la direction axiale du mécanisme de transmission (103) ; **caractérisé en ce que**
le moteur (E) comprend en outre un dispositif d'opération de soupape (48R) pourvu en outre de mécanismes de changement de mode d'opération de soupape (63, 64) capables de changer de modes d'opération de soupapes de moteur (44,45),
un dispositif d'embrayage (102) permettant de commuter la réalisation/le freinage de transmission de puissance entre ledit vilebrequin (36) et le mécanisme de transmission (103),
ledit dispositif d'embrayage (102) étant disposé sur un côté latéral dudit carter de vilebrequin (35) sur le côté d'une extrémité dudit vilebrequin (36),
une unité de commande d'opération de soupape (221) permettant de commander les opérations desdits mécanismes de changement de mode d'opération de soupape (63, 64), et
une unité de commande de changement de vitesse (191) permettant de commander une opération de changement de vitesse dudit mécanisme de transmission (103),
ladite unité de commande d'opération de soupape (221) et ladite unité de commande de changement de vitesse (191) étant attachées au corps de moteur (33) incluant ledit carter de vilebrequin (35),
dans laquelle ladite unité de commande d'opération de soupape (221) et ladite unité de commande de changement de vitesse (191) sont attachées audit corps de moteur (33) sur le côté opposé dudit dispositif d'embrayage (102) par rapport à une ligne centrale de carrosserie de véhicule (CB) dans une direction le long de l'axe dudit vilebrequin (36).

2. Structure selon la revendication 1,
dans laquelle l'extrémité d'arbre d'un arbre de sortie (107) est couverte par un couvercle (116, 117) qui est attachée de manière détachable à une surface latérale du carter de vilebrequin (35), l'arbre de sortie (107) faisant partie du mécanisme de transmission (103) de telle sorte que le couple transmis du vilebrequin (36) au mécanisme de transmission (103) est fourni en sortie vers la roue motrice (WR) par l'intermédiaire de l'arbre de sortie (107), et
l'actionneur de changement (181) est attaché à la surface latérale du carter de vilebrequin (35) dans une position située au-dessus du couvercle (116, 117) et située plus près du centre que les extrémités externes (116, 117) s'étendant le long de la direction axiale de l'arbre de sortie (107).

3. Structure selon l'une quelconque des revendications 1 et 2, comprenant en outre :
un couvercle de générateur (87) attaché à la surface latérale du carter de vilebrequin (35) ;
une chambre de générateur (88) formée par le couvercle du générateur (87); et
un générateur (84) qui est raccordé au vilebrequin (36) et qui est installé dans la chambre de générateur (88), où
l'actionneur de changement (181) est attaché à la surface latérale du carter de vilebrequin (35) de manière à être placé dans une position située à l'arrière du couvercle de générateur (87) et située plus près du centre que l'extrémité externe du couvercle de générateur (87) s'étendant le long de la direction axiale du vilebrequin (36).

4. Structure selon la revendication 3,
dans laquelle l'actionneur de changement (181) est attaché à la surface latérale du carter de vilebrequin (35) tandis que l'axe opérationnel de l'actionneur de changement (181) est dirigé en oblique dans la direction de bas en haut.

5. Structure selon la revendication 1,
dans laquelle ladite unité de commande d'opération de soupape (221) et ladite unité de commande de changement de vitesse (191) sont attachées à une surface latérale, le long de ladite ligne centrale de carrosserie de véhicule (CB), dudit corps de moteur (33).

6. Structure selon la revendication 4 ou 5,
dans laquelle un couvercle d'embrayage (92) définissant entre lui-même et ledit carter de vilebrequin (35) une chambre d'embrayage (91) permettant de contenir ledit dispositif d'embrayage (102) est raccordé audit carter de vilebrequin (35), et une unité de commande d'embrayage (220) permettant de commander des opérations d'embrayage/de débrayage dudit dispositif d'embrayage (102) est attachée audit couvercle d'embrayage (92).

7. Structure selon la revendication 4 ou la revendication 6 lorsqu'elle dépend de la revendication 4,
dans laquelle le générateur (84) entraîné par la puissance transmise depuis ledit vilebrequin (36) est disposé sur le côté opposé dudit dispositif d'embrayage (102) dans la direction axiale dudit vilebrequin (36), et un pilote de commande de tension de génération de puissance (286) permettant de commander une tension de génération de puissance dudit générateur (84) est attaché à l'intérieur du couvercle de générateur (87).

8. Structure selon l'une quelconque des revendications 4 à 7,
dans laquelle ledit mécanisme de transmission (103) inclut des premier et second arbres d'entrée (105, 106) parallèles l'un à l'autre et parallèles à l'arbre de sortie (107), et ledit dispositif d'embrayage (102) est configuré pour être de type à embrayage double, incluant un premier embrayage (124) interposé entre ledit vilebrequin (36) et ledit premier arbre d'entrée (105), et un second embrayage (125) interposé entre ledit vilebrequin (36) et ledit second arbre d'entrée (106).

9. Structure selon l'une quelconque des revendications précédentes,
dans laquelle le mécanisme de transmission (103) comprend un tambour de changement (180) qui est monté avec faculté de rotation sur le carter de vilebrequin (35), et
dans laquelle l'unité de commande de changement de vitesse (191) est configurée pour entraîner ledit tambour de changement (180) pour qu'il tourne de manière à amener ledit mécanisme de transmission (103) à réaliser une opération de changement de vitesse, ladite unité de commande de changement de vitesse (191) incluant un dispositif de transmission de puissance (207) configuré pour transmettre une puissance de rotation de l'actionneur de changement (181) audit tambour de changement (180), ledit actionneur de changement (181) et au moins une partie dudit dispositif de transmission de puissance (207) étant disposés sur un côté latéral dudit carter de vilebrequin (35) sur le côté d'une extrémité dans la direction axiale dudit tambour de changement (180), ledit actionneur de changement (181) et ledit tambour de changement (180) étant ainsi disposés de manière à se chevaucher au moins en partie l'un l'autre dans une vue le long de la direction axiale dudit tambour de changement (180).

10. Structure selon la revendication 9,
dans laquelle ledit dispositif de transmission de puissance (207) inclut un moyen de réduction de vitesse (182) permettant de transmettre ladite puissance de rotation dudit actionneur de changement (181) tout en réduisant la vitesse de rotation de sortie dudit actionneur de changement (181), et un moyen de conversion de mouvement (183) raccordé de manière conjointe audit moyen de réduction de vitesse (182) de manière à être mis en rotation par la puissance transmise par ledit moyen de réduction de vitesse (182) et convertir le mouvement de rotation en un mouvement tournant dudit tambour de changement (180), et ledit moyen de conversion de mouvement (183) et ledit actionneur de changement (181) disposés sur un côté latéral dudit carter de vilebrequin (35) sur le côté de l'extrémité dans la direction axiale dudit tambour de changement (180) sont disposés de manière à se chevaucher au moins en partie l'un l'autre dans une vue le long de la direction axiale dudit tambour de changement (180).

11. Structure selon la revendication 10,
dans laquelle le moyen de conversion de mouvement (183) est disposé de manière à chevaucher au moins en partie ledit tambour de changement (180) dans une vue le long de la direction axiale dudit tambour de changement (180).

12. Structure selon la revendication 10 ou 11,
dans laquelle des axes de rotation dudit actionneur de changement (181), dudit moyen de réduction de vitesse (182) et dudit moyen de conversion de mouvement (183) sont disposés dans un plan orthogonal à l'axe dudit tambour de changement (180).

13. Structure selon l'une quelconque des revendications 10 à 12, dans laquelle
ledit moyen de conversion de mouvement (183) est disposé de sorte que son axe de rotation soit parallèle à l'axe de rotation dudit actionneur de changement (181).

14. Structure selon l'une quelconque des revendications 10 à 13, dans laquelle
ledit moyen de conversion de mouvement (183) est disposé de manière à ce qu'au moins une partie en soit incluse dans une largeur maximale dudit actionneur de changement (181) dans la direction axiale de l'actionneur de changement (181) dans une vue le long de la direction axiale dudit tambour de changement (180).

15. Structure selon l'une quelconque des revendications 10 à 14, dans laquelle
ledit moyen de conversion de mouvement (183) est une came périphérique qui est pourvue dans sa périphérie externe d'un chemin de came hélicoïdal (197).
